# EUROPÄISCHE PATENTSCHRIFT

(11) **EP 4 251 956 B1**
(45) Veröffentlichungstag und Bekanntmachung des Hinweises auf die Patenterteilung: **29.01.2025**
(21) Anmeldenummer: 21819844.8
(22) Anmeldetag: 26.11.2021
(51) Int. Cl.: G01F 1/84, G01N 9/00, G01N 11/16

(54) **MESSAUFNEHMER EINES MESSGERÄTES UND MESSGERÄT**
SENSOR OF A MEASUREMENT DEVICE AND MEASUREMENT DEVICE
CAPTEUR D'UN DISPOSITIF DE MESURE ET DISPOSITIF DE MESURE

(30) Priorität: 27.11.2020 DE 102020131563
(43) Veröffentlichungstag der Anmeldung: 04.10.2023
(73) Patentinhaber: Endress+Hauser Flowtec AG, 4153 Reinach (CH)
(72) Erfinder: SCHWENTER, Benjamin, 4226 Breitenbach (CH); WERNER, Marc, 79639 Grenzach-Wyhlen (DE); SCHÜTZ, Markus, 4432 Lampenberg (CH)
(74) Vertreter: Penner, Paul
(86) Internationale Anmeldenummer: PCT/EP2021/083119
(87) Internationale Veröffentlichungsnummer: WO 2022/112482

(56) Entgegenhaltungen:
- DE-A1- 102006 013 601
- DE-A1- 102010 030 341
- US-A1- 2003 097 881
- US-A1- 2017 146 380
- US-A1- 2020 319 006

## Beschreibung

Die Erfindung betrifft einen Messaufnehmer eines Messgerätes zum Erfassen eines Massedurchflusses, einer Viskosität, einer Dichte und/oder einer davon abgeleiteten Größe eines fließfähigen Mediums und ein Messgerät zum Erfassen eines Massedurchflusses, einer Viskosität, einer Dichte und/oder einer davon abgeleiteten Größe eines fließfähigen Mediums, insbesondere ein Coriolis-Durchflussmessgerät für bevorzugt biopharmazeutische Anwendungen.

Feldgeräte der Prozessmesstechnik mit Messaufnehmern vom Vibrationstyp und besonders Coriolis-Durchflussmessgeräte sind seit vielen Jahren bekannt. Der grundsätzliche Aufbau eines solchen Messgerätes wird beispielsweise in der EP 1 807 681 A1 beschrieben.

Typischerweise weisen Coriolis-Durchflussmessgeräte zumindest ein oder mehrere schwingfähige Messrohre auf, welche mittels eines Schwingungserregers in Schwingung versetzt werden können. Diese Schwingungen übertragen sich über die Rohrlänge und werden durch die Art des im Messrohr befindlichen fließfähigen Mediums und dessen Durchflussgeschwindigkeit beeinflusst. Ein Schwingungssensor oder insbesondere zwei in Fließrichtung voneinander beabstandete Schwingungssensoren können die Schwingungen in Form eines Messsignals oder mehrerer Messsignale aufnehmen. Aus dem Messsignal oder den Messsignalen kann eine Auswerteeinheit sodann den Massedurchfluss, die Viskosität,die Dichte und/oder eine davon abgeleitete Größe des fließfähigen Mediums ermitteln.

Es sind Coriolis-Durchflussmessgeräte mit austauschbaren Einweg-Messrohranordnungen bekannt. So wird beispielsweise in der WO 2011/099989 A1 ein Verfahren zur Herstellung einer monolithisch ausgebildeten Messrohranordnung eines Coriolis-Durchflussmessgerätes mit gebogenen Messrohren gelehrt, wobei der Messrohrkörper der jeweiligen Messrohre zuerst massiv aus einem Polymer gebildet und der Kanal zum Führen des fließfähigen Mediums anschließend spannend eingearbeitet wird. Die WO 2011/099989 A1 lehrt -ebenso wie die US 10,209,113 B2 - einen Verbindungskörper, welcher dazu eingerichtet ist die auswechselbare Messrohranordnung aufzunehmen und zu stützen. Beide Dokumente offenbaren jedoch nicht wie die Einweg-Messrohranordnung an ein Schlauch- und/oder Kunststoffrohrsystem anschließbar ist. In US 2020/319006 A1 ist ein Messaufnehmer gemäß dem Stand der Technik offenbart.

Ausgehend vom dargelegten Stand der Technik liegt der Erfindung die Aufgabe zugrunde, eine Lösung für den Anschluss des Messaufnehmers an ein Schlauch- und/oder Kunststoffrohrsystem bereitzustellen.

Des Weiteren liegt die Aufgabe zugrunde, ein Messgerät mit einem entsprechenden Messaufnehmer bereitzustellen.

Die Aufgabe wird gelöst durch den Messaufnehmer nach Anspruch 1 und das Messgerät nach Anspruch 12.

Der erfindungsgemäße Messaufnehmer eines Messgerätes zum Erfassen eines Massedurchflusses, einer Viskosität, einer Dichte und/oder einer davon abgeleiteten Größe eines fließfähigen Mediums, umfasst:
- eine Messrohranordnung zum Führen des fließfähigen Mediums,
   wobei die Messrohranordnung mindestens ein Messrohr aufweist,
   wobei das mindestens eine Messrohr einen Einlaufabschnitt und einen Auslaufabschnitt aufweist;
- mindestens eine erste Erregerkomponente eines Schwingungserregers zum Anregen des mindestens einen Messrohres in Schwingungen,
   wobei die mindestens eine Erregerkomponente an dem mindestens einen Messrohr angeordnet ist;
- mindestens eine erste Sensorkomponente eines Schwingungssensors zum Erfassen der Schwingungen des mindestens einen Messrohres
   wobei die mindestens eine erste Sensorkomponente an dem mindestens einen Messrohr angeordnet ist;
- eine Fixierkörperanordnung
   wobei die Fixierkörperanordnung mit dem mindestens einen Messrohr im Einlaufabschnitt und im Auslaufabschnitt verbunden ist; und
- eine Verbindungsvorrichtung zum lösbaren Verbinden der Messrohranordnung mit einer Prozessleitung,
   wobei die Verbindungsvorrichtung Messrohranschlussöffnungen aufweist, an welche die Messrohranordnung angeschlossen ist,
   wobei die Verbindungsvorrichtung mit dem mindestens einem Messrohr im Einlaufabschnitt und im Auslaufabschnitt verbunden ist,
- eine Verschlussvorrichtung
   wobei über die Verschlussvorrichtung eine formschlüssige und/oder kraftschlüssige Verbindung zwischen der Verbindungsvorrichtung und der Fixierkörperanordnung ausgebildet ist.

Das erfindungsgemäße Messgerät zum Erfassen eines Massedurchflusses, einer Viskosität, einer Dichte und/oder einer davon abgeleiteten Größe eines fließfähigen Mediums, insbesondere ein Coriolis-Durchflussmessgerät umfasst:
- eine Trägervorrichtung;
- den erfindungsgemäßen Messaufnehmer;
- mindestens eine zweite Erregerkomponenten des Schwingungserregers; und
- mindestens eine zweite Sensorkomponente des Schwingungssensors
   wobei die Trägervorrichtung einen Trägervorrichtungskörper mit einer Aufnahme aufweist,
   wobei der Messaufnehmer in der Aufnahme angeordnet und mechanisch trennbar mit dem Trägervorrichtungskörper verbindbar ist;
   wobei die zweite Erregerkomponente an dem Trägervorrichtungskörper angeordnet ist,
   wobei die zweite Sensorkomponente an dem Trägervorrichtungskörper angeordnet ist,
   wobei der Schwingungserreger eine Betriebsschaltung umfasst, welche mit zumindest einer Erregerkomponente, insbesondere der zweiten Erregerkomponente des Schwingungserregers verbunden ist,
   wobei der Schwingungssensor eine Messschaltung umfasst, welche zumindest mit einer Sensorkomponente, insbesondere der zweiten Sensorkomponente des Schwingungssensors elektrisch verbunden ist.

Erfindungsgemäß dient die Verbindungsvorrichtung als Adapter zum Verbinden der Messrohranordnung an ein Schlauch- und/oder Kunststoffrohrsysteme mit variablen Nennweiten. Somit kann die Messrohranordnung unabhängig von den Schlauch- und/oder Kunststoffrohrsystem hergestellt und bei Bedarf über einen für das Schlauch- und/oder Kunststoffrohrsystem vorgesehenen Verbindungsvorrichtung über entsprechende Prozessanschlüsse mit dem Schlauch- und/oder Kunststoffrohrsystem verbunden werden.

Die Verbindungsvorrichtung kann aus einem Werkstoff gebildet sein, welcher Stahl, Kunststoff, Keramik und/oder Glas aufweist.

Die Messrohre umfassen jeweils einen Messrohrkörper, welcher aus einem Werkstoff gebildet ist, der Metall, insbesondere Stahl, Kunststoff, Glas und/oder Keramik aufweist. Die Messrohre sind mindestens einmal gebogen. Vorzugsweise ist eine Grundform des Messrohrkörpers U-förmig ausgebildet. Es sind jedoch auch andere Formen mit mindestens einem Bogen bekannt, welche auch unter dem Schutzumfang der Erfindung fallen.

Der mindestens eine Schwingungserreger umfasst üblicherweise mindestens einen Erregermagneten und mindestens eine Erregerspule zum Erzeugen eines zeitlich veränderlichen Magnetfeldes. Der Erregermagnet ist an dem, in Schwingungen anzuregenden Messrohr angeordnet. Die Erregerspule kann an einem weiteren Messrohr oder an einer Trägervorrichtung angeordnet sein, in welche das Messrohr bzw. der Messaufnehmer eingesetzt wird und die dazu dient, den Messaufnehmer vor Störungseinflüssen abzuschirmen und/oder die elektronischen Komponenten des Messgerätes, wie Mess-, Betriebs- und/oder Auswerteschaltung unterzubringen. Die Messrohranordnung kann zudem einen eindeutige Identifikator aufweisen, beispielsweise in Form eines QR-Codes und/oder eines RFID-Tags. Der Identifikator kann Informationen bzgl. des Nullpunktes und/oder des Kalibrationsfaktors aufweisen mit deren Hilfe die Auswerteschaltung eine korrigierte Messgröße ermittelt.

Der mindestens eine Schwingungssensor umfasst in der Regel mindestens einen Sensormagneten und eine Sensorspule zum Erfassen eines zeitlich veränderlichen Magnetfeldes. Der Sensormagnet ist an einem, in Schwingungen zu versetzenden Messrohr angeordnet. Die Sensorspule kann an einem weiteren in Schwingungen zu versetzenden Messrohr oder an der Trägervorrichtung des Messgerätes angeordnet sein.

Durch den Formschluss zwischen Verbindungsvorrichtung und Fixierkörperanordnung ist ein Verbinden der beiden Bauteile ohne zusätzliches Werkzeug möglich. Die Verbindung zwischen der Fixierkörperanordnung und der Verbindungsvorrichtung kann so ausgestaltet sein, dass ein Lösen der Verbindung nur durch Abbrechen bzw. Abtrennen der Verschlussvorrichtung von der Verbindungsvorrichtung möglich ist. Zudem kann die Öffnung und die Verschlussvorrichtung derart ausgebildet sein, dass eine fehlerhafte Zuordnung zwischen Verschlussvorrichtung und Messrohranordnung vorgebeut wird.

Gemäß der Ausgestaltung übernimmt die Verbindungsvorrichtung die Funktion eines Verteilerstückes, d.h. er teilt einen Kanal in zwei getrennte Kanäle auf. Dadurch, dass Verbindungsvorrichtung und Messrohranordnung zwei getrennte Komponenten sind, ist es möglich die Geometrie und Form der Messrohre unabhängig von der Form und Geometrie der Verbindungsvorrichtung auszugestalten bzw. zu optimieren.

Vorteilhafte Ausgestaltung der Erfindung sind Gegenstand der Unteransprüche.

Eine Ausgestaltung sieht vor, dass die Fixierkörperanordnung ein erste Fixierkörperanordnungsseite und eine zweite Fixierkörperanordnungsseite aufweist,
wobei die erste Fixierkörperanordnungsseite und die zweite Fixierkörperanordnungsseite einander abgewandt sind,
wobei sich eine Fixierkörperanordnungsöffnung von der ersten Fixierkörperanordnungsseite zur zweiten Fixierkörperanordnungsseite erstreckt,
wobei sich die Verschlussvorrichtung durch die Fixierkörperanordnungsöffnung erstreckt,
wobei die Verbindungsvorrichtung eine Kontaktfläche aufweist,
wobei die Fixierkörperanordnung an der ersten Fixierkörperanordnungsseite eine Berührfläche aufweist,
wobei sich die Kontaktfläche und die Berührfläche berühren,
wobei die Verbindungsvorrichtung über die Verschlussvorrichtung eine Kraft auf die Fixierkörperanordnung bewirkt mit einem Kraftanteil in Richtung der zweiten Fixierkörperanordnungsseite
wobei die Verschlussvorrichtung insbesondere stoffschlüssig mit der Verbindungsvorrichtung verbunden ist oder mit der Verbindungsvorrichtung monolithisch verbunden ist.

Eine zusätzlich zu der formschlüssigen Verbindung in Richtung der zweiten Fixierkörperanordnungsseite wirkende Kraftanteil erschwert das Lösen der Verbindung.

Die Verschlussvorrichtung ist derart ausgebildet, dass sie sich beim Durchführen durch die Öffnung bis zu einem Punkt elastisch verformt und dann einrastet, um somit die formschlüssige Verbindung zu bilden.

Eine Ausgestaltung sieht vor, dass die Verbindungsvorrichtung eine erste Verbindungsvorrichtungsseite und eine zweite Verbindungsvorrichtungsseite aufweist,
wobei die erste Verbindungsvorrichtungsseite und die zweite Verbindungsvorrichtungsseite einander abgewandt sind,
wobei sich eine Verbindungsvorrichtungsöffnung von der ersten Verbindungsvorrichtungsseite zur zweiten Verbindungsvorrichtungsseite erstreckt,
wobei sich die Verschlussvorrichtung durch die Verbindungsvorrichtungsöffnung erstreckt,
wobei die Verschlussvorrichtung eine Kontaktfläche aufweist,
wobei die Verbindungsvorrichtung an der ersten Verbindungsvorrichtungsseite eine Berührfläche aufweist,
wobei sich die Kontaktfläche und die Berührfläche berühren,
wobei die Messrohranordnung über die Verschlussvorrichtung eine Kraft auf die Verbindungsvorrichtung bewirkt mit einem Kraftanteil in Richtung der zweiten Verbindungsvorrichtungsseite,
wobei die Verschlussvorrichtung insbesondere stoffschlüssig mit der Fixierkörperanordnung verbunden ist oder mit der Fixierkörperanordnung monolithisch verbunden ist.

Es ist weiterhin vorteilhaft, wenn zumindest die Fixierkörperanordnung aus Stahl und die Verbindungsvorrichtung aus einem Kunststoff gefertigt ist. Dadurch wird eine hinreichende Fixierung in einer Aufnahmevorrichtung ermöglicht und ein Verschieben des Nullpunktes beim Einbau reduziert. Dies hat zudem den Vorteil, dass die Verbindung zwischen Fixierkörperanordnung und Verbindungsvorrichtung schwerer zu lösen ist.

Eine Ausgestaltung sieht vor, dass die Verschlussvorrichtung mindestens eine Rastnase umfasst.

Eine Ausgestaltung sieht vor, dass die Verschlussvorrichtung mindestens vier Rastnase umfasst, welche rotationssymmetrisch um eine Rotationsachse angeordnet sind,
wobei die Rotationsachse parallel zu einer Längsachse der Messrohranordung verläut.

Eine Ausgestaltung sieht vor, dass die Verbindungsvorrichtung eine, insbesondere als Durchgangsloch ausgebildete Verbindungsvorrichtungsöffnung aufweist,
wobei die Fixierkörperanordnung eine als Durchgangsloch ausgebildete Fixierkörperanordnungsöffnung aufweist,
wobei die Verschlussvorrichtung mindestens einen Klemmschenkel umfasst,
wobei sich der mindestens eine Klemmschenkel durch die Fixierkörperanordnungsöffnung und zumindest teilweise durch die Verbindungsvorrichtungsöffnung erstreckt,
wobei die Verschlussvorrichtung einen Stift umfasst,
wobei sich der Stift durch die Fixierkörperanordnungsöffnung und zumindest teilweise durch die Verbindungsvorrichtungsöffnung erstreckt und dazu eingerichtet ist, eine Kraft auf den mindestens einen Klemmschenkel radial zur Längsachse der Verbindungsvorrichtungsöffnung zu bewirken.

Dies führt zu einer Verbesserung der Fixierung und Realisierung einer nicht lösbaren Verbindung die besonders für biotechnologische Anwendungen geeignet ist.

Eine Ausgestaltung sieht vor, dass die Verschlussvorrichtung eine, insbesondere nicht lösbare Niete, vorzugsweise Spreizniete umfasst.

Eine Ausgestaltung sieht vor, dass die Verschlussvorrichtung mindestens einen spreizbaren und insbesondere monolitisch mit der Verbindungsvorrichtung verbundenen Spreizschenkel aufweist,
wobei die Verschlussvorrichtung eine Verschlussvorrichtungsöffnung aufweist,
wobei die Fixierkörperanordnung eine Fixierkörperanordnungsöffnung aufweist,
wobei sich der mindestens eine Spreizschenkel durch die Fixierkörperanordnungsöffnung erstreckt,
wobei die Verschlussvorrichtung einen Stift umfasst,
wobei der Stift in der Verschlussvorrichtungsöffnung angeordnet ist und dazu eingerichtet ist eine radiale Kraft auf den mindestens einen Spreizschenkel zu bewirken.

Der Vorteil der Ausgestaltung liegt in der Vereinfachung der Montage der beiden Bauteile Verbindungsvorrichtung und Messrohranordnung. Alternativ kann die Verschlussvorrichtung, insbesondere der Stift in der Verbindungsvorrichtung integriert sein. Dies kann über Stützstrukturen realisiert sein, die den Stift in der Verbindungsvorrichtungsöffnung halten. Beim Eindrücken des Stiftes werden die Verbindungen des Stiftes zur Stützstruktur getrennt werden. Eine derartige Ausgestaltung der Verbindungsvorrichtung kann beispielsweise mittels einem Spritzgußverfahrens hergestellt werden.

Eine Ausgestaltung sieht vor, dass die Verschlussvorrichtung mindestens einen Tannenclips umfasst.

Eine Ausgestaltung sieht vor, dass die Verbindungsvorrichtung einen Verbindungsvorrichtungskörper aufweist,
wobei die Verbindungsvorrichtungskörper einen Kunststoff, bevorzugt Polyetheretherketone Polyaryletherketone Polyphenylsulfone Polyethersulfone Polysulfone Polyarylamide Polypropylene Polycarbonate Polyethylene Fluoropolymere und/oder Hart-Polyethylene aufweist,
wobei die Messrohranordnung einen Messrohranordnungskörper aufweist,
wobei der Messrohranordnungskörper Stahl aufweist.

Es existiert eine Nachfrage an Messgeräten mit Einweg-Messrohren bzw. Einweg-Messrohranordnungen für biopharmazeutische Anwendungen. Dafür müssen die Materialien, welche in Kontakt mit dem Medium kommen biokompatibel und gammasterilisierbar sein. Es ist daher besonders vorteilhaft, wenn das Messrohr aus einem der oben genannten Materialien hergestellt ist, da diese die biopharmazeutischen Anforderungen erfüllen. Die genannten Kunststoffe eignen sich zudem als Vergussmasse in einem Spritzgussverfahren zur Herstellung der Verbindungsvorrichtung.

Es ist vorteilhaft, wenn sich der Werkstoff des Messrohranordnungskörpers von dem Werkstoff des Verbindungsvorrichtungskörpers unterscheidet. Somit kann das Gesamtgewicht des Messaufnehmers reduziert werden. Die Messrohre können vorzugsweise aus Stahl gebildet sein und die Verbindungsvorrichtung aus Kunststoff. Das sich daraus gebildete Hybridsystem erfüllt die Anforderungen an die Messperformance und weist gleichzeitig ein geringes Gewicht auf, was insbesondere vorteilhaft im Gammasterilisationsverfahren ist.

Eine Ausgestaltung sieht vor, dass die Verschlussvorrichtung insbesondere mittels Ultraschallnieten derart verformt ist, dass ein Endabschnitt der Verschlussvorrichtung einen größere Querschnittsfläche aufweist als eine Querschnittsfläche der Fixierkörperanordnungsöffnung oder der Verbindungsvorrichtungsöffnung.

Beim Ultraschallnieten wird ein Teil der Kunststoff-Verschlussvorrichtung - in dem Fall der Endabschnitt - derart verformt, dass sich ein Niet ausbildet zum Herstellen einer Nietverbindung zwischen der Verbindungsvorrichtung und der Fixierkörperanordnung.

Eine Ausgestaltung sieht vor, dass die Verschlussvorrichtung eine stoffschlüssige Verbindung mit der ersten Fixierkörperanordnungsseite bildet.

Es hat sich als vorteilhaft herausgestellt, das Material der Verschlussvorrichtung so zu wählen, dass sich die Verschlussvorrichtung beim Ultraschallnieten zumindest abschnittsweise, insbesondere im Kontakt zur ersten Fixierkörperanordnungsseite verflüssigt und somit eine stoffschlüssige Klebeverbindung zwischen Verschlussvorrichtung und Fixierkörperanordnung erreicht wird.

Eine Ausgestaltung sieht vor, dass die Verschlussvorrichtung in einem Endbereich eine geriffelte Oberfläche aufweist.

Vorteilhaft an der Ausgestaltung ist, dass somit der Schweißbadvortrieb definiert geführt wird.

Eine Ausgestaltung sieht vor, dass die Verschlussvorrichtung eine Verschlussvorrichtungswandstärke aufweist,
wobei die Verbindungsvorrichtung als Hohlkörper ausgebildet ist und eine Verbindungsvorrichtungswandstärke aufweist,
wobei die Verschlussvorrichtungswandstärke immer kleiner gleich einer maximalen Verbindungsvorrichtungswandstärke ist.

Eine Ausgestaltung sieht vor, dass die Verschlussvorrichtung einen Verschlussvorrichtungsdurchmesser aufweist,
wobei der Verschlussvorrichtungsdurchmesser größer gleich dem zweifachen der maximalen Verbindungsvorrichtungswandstärke ist,
wobei die Verschlussvorrichtung ein Sackloch oder ein Durchgangsloch aufweist, welches sich durch die Fixierkörperanordnungsöffnung erstreckt und welche die Verschlussvorrichtungswandstärke begrenzt.

Eine Ausgestaltung sieht vor, dass die Verbindungsvorrichtung mindestens eine Öffnung aufweist,
wobei sich die Verschlussvorrichtung durch die mindestens eine Öffnung erstreckt.

Eine Ausgestaltung sieht vor, dass die Verbindungsvorrichtung mindestens zwei Öffnungen aufweist,
wobei die Verschlussvorrichtung mindestens zwei Zapfen umfasst,
wobei sich die mindestens zwei Zapfen durch die mindestens zwei Öffnungen erstrecken,
wobei die Verschlussvorrichtung ein Verbindungselement, insbesondere ein Bügelelement aufweist, welches die mindestens zwei Zapfen miteinander verbindet.

Vorteilhaft an der Ausgestaltung ist, dass dadurch die Anzahl der Montageschritte und gleichzeitig der Herstellschritte der Zapfen reduziert wird.

Eine Ausgestaltung sieht vor, dass die Verbindungsvorrichtung mindestens vier Öffnungen aufweist,
wobei die Verschlussvorrichtung mindestens vier Zapfen aufweist, welche über mindestens vier Bügeln miteinander verbunden sind.

Eine alternative Ausgestaltung sieht vor, dass die Verbindungsvorrichtung mindestens vier Öffnungen aufweist,
wobei die Verschlussvorrichtung mindestens vier Zapfen aufweist, welche und einen insbesondere plattenförmigen Verbindungskörper miteinander verbunden sind.

Eine Ausgestaltung sieht vor, dass der mindestens eine Zapfen eine Zapfenöffnung aufweist, die derart ausgestaltet ist, dass eine Zapfenwandstärke in einem Endbereich des Zapfens immer kleiner gleich als eine maximale Zapfenwandstärke ist.

Dies führt dazu, dass Einfallstellen im Zapfen effektiv vermieden werden.

Eine Ausgestaltung sieht vor, dass die Öffnungen und Zapfen symmetrisch zu einer Spiegelebene der Messrohranordnung angeordnet sind.

Es hat sich überraschenderweise als vorteilhaft herausgestellt die Zapfen symmetrisch zu einer Spiegelebene der Messrohranordnung, insbesondere der Messrohre anzuordnen, da dies zu einer Reduzierung des Nullpunktfehler führt.

Eine Ausgestaltung sieht vor, dass der mindestens eine Zapfen einen Kopf aufweist, welcher an einer der ersten Fixierkörperanordnungsseite zugewandten Zapfenseite eine Hinterschneidung aufweist, die nicht in Kontakt mit der Fixierkörperanordnung steht.

Der Kopf weist eine größere Querschnittsfläche auf als der Teil des mindestens einen Zapfens, welcher sich durch die Fixierkörperanordnungsöffnung erstreckt. Das Vorsehen einer Hinterschneidung hat den Vorteil, dass dadurch weniger Defekte durch scharfkantige Stellen an dem Kontaktbereich zwischen Fixierkörperanordnung und Verschlussvorrichtung.

Eine alternative Ausgestaltung sieht vor, dass der mindestens eine Zapfen mittels Ultraschallschweißen derart mit der Verbindungsvorrichtung verbunden ist, dass eine stoffschlüssig Verbindung ausgebildet ist.

Eine Alternative zum Verbinden der Fixierkörperanordnung mit der Verbindungsvorrichtung mittels Ultraschallnieten ist das Ultraschallschweißen. Anders als beim Ultraschallnieten wird kein Niet durch abschnittsweise Verformen der Verbindungsvorrichtung ausgebildet, sondern es wird ein aus Kunststoff ausgebildetet Zapfen oder Niet mit der ebenfalls aus Kunststoff ausgebildeten Verbindungsvorrichtung mittels Ultraschall verschweißt. Der Zapfen bzw. der Niet kann monolithisch mit der Verbindungsvorrichtung verbunden oder als ein separates Bauteil, welches in einer Öffnung in der Verbindungsvorrichtung angeordnet ist ausgebildet sein.

Eine Ausgestaltung sieht vor, dass die Messrohranordnung zwei gebogene Messrohre umfasst,
wobei durch die zwei Messrohre jeweils eine Messrohrspiegelebene verläuft,
wobei der mindestens eine Zapfen innerhalb eines durch die beiden Messrohrspiegelebenen begrenzenden Abschnittes oder mindestens eine der Messrohrspiegelebenen schneidend angeordnet ist,
wobei zwei senkrecht zu den Messrohrspiegelebenen verlaufende Messrohrebenen einen Bereich eingrenzen in dem der mindestens eine Zapfen angeordnet ist,
wobei eine der Messrohrebenen jeweils die Einläufe der Messrohre und eine der Messrohrebenen jeweils die Ausläufe der Messrohre schneidet.

Die Erfindung wird anhand der nachfolgenden Figuren näher erläutert. Es zeigt:
Fig. 1: eine perspektivische Ansicht auf zwei Ausgestaltungen des erfindungsgemäßen Messaufnehmers;
Fig. 2: zwei perspektivische Ansichten auf eine weitere Ausgestaltung des Messaufnehmers und der Verbindungsvorrichtung;
Fig. 3: eine teilweise geschnittene Perspektivansicht auf eine Ausgestaltung des Messgerätes;
Fig. 4: einen Teilausschnitt eines Längsschnittes durch eine Ausgestaltung des erfindungsgemäßen Messaufnehmers;
Fig. 5: eine Explosionsansicht einer erfindungsgemäßen Ausgestaltung des Messaufnehmers;
Fig. 6: einen Teilausschnitt eines Längsschnittes durch eine weitere Ausgestaltung des erfindungsgemäßen Messaufnehmers;
Fig. 7: weitere Ausgestaltungen A bis D der Verbindungsvorrichtung;
Fig. 8: eine perspektivische Ansicht auf eine weitere Ausgestaltung der Verbindungsvorrichtung;
Fig. 9: eine perspektivische Ansicht auf eine weitere Ausgestaltung der erfindungsgemäßen Verbindungsvorrichtung; und
Fig. 10: eine zumindest teilweise geschnittene Ansicht auf eine weitere Ausgestaltung der erfindungsgemäßen Verbindungsvorrichtung.

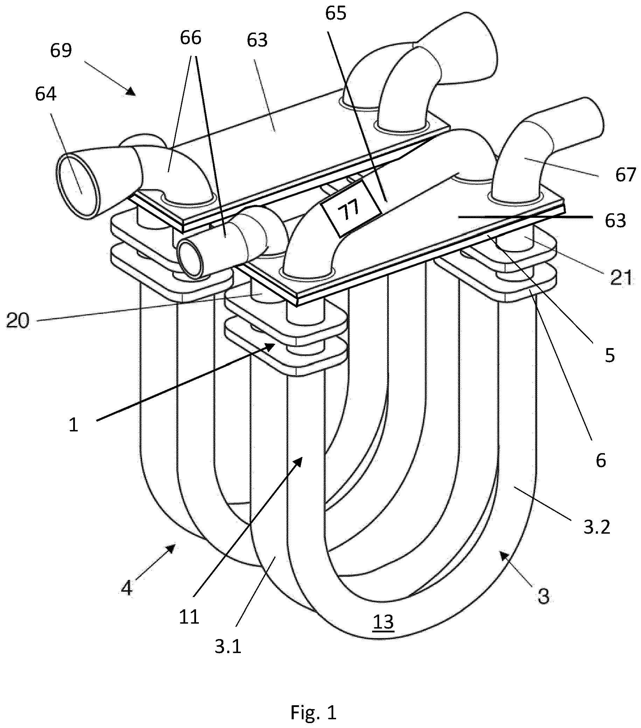

Die Fig. 1 zeigt eine perspektivische Ansicht auf zwei Ausgestaltungen des Messaufnehmers 69. Die erste Ausgestaltung weist eine Messrohranordnung 4 mit einer angeordneten Fixierkörperanordnung 5 auf. Die Messrohranordnung 4 umfasst genau zwei Messrohre 3.1, 3.2, welche über eine Koppleranordnung 1 - umfassend zwei Kopplungselemente 6 im Einlaufabschnitt 20 und zwei Kopplungselemente 6 im Auslaufabschnitt 21 - miteinander mechanisch gekoppelt sind. Die Kopplungselemente 6 dienen dazu einen Oszillator aus den beiden einzeln in Schwingungen angeregten Messrohren 3 zu bilden. Gemäß der abgebildeten Ausgestaltung sind die Kopplungselemente 6 plattenförmig ausgebildet mit abgerundeten Kanten. Es sind jedoch auch andere Formen bekannt. Im Rahmen der Erfindung wird sich weder auf eine Form noch auf eine Anzahl an Kopplungselementen 6 eingeschränkt. Aus Übersichtsgründen sind der Schwingungserreger und die Schwingungssensoren, insbesondere deren einzelnen Komponenten nicht abgebildet. Zwischen Einlaufabschnitt 20 und Auslaufabschnitt 21 weisen die beiden Messrohre 3.1, 3.2jeweils zwei Schenkel 11 und einen die beiden Schenkel 11 verbindenden Bogen auf, so dass der jeweilige Messrohrkörper 13 U-förmig ist. Eine Fixierkörperanordnung 5 ist an den jeweiligen Enden der Messrohre 3.1, 3.2 angeordnet und verbindet die zwei Messrohre 3.1, 3.2 der Messrohranordnung 4 miteinander. Mit der Fixierkörperanordnung 5 mechanisch verbunden ist eine Verbindungsvorrichtung 63, welche Rohranschlussöffnungen 64 aufweist, an welche in einem angeschlossenen Zustand ein Schlauch- und/oder Kunststoffrohrsystem angeschlossen ist und die als Prozessanschluss ausgebildet sein können. Es sind eine Vielzahl an Prozessanschlüssen, wie z.B. Flansche, Schneidringverschraubungen, Schlauchverschraubungen, Anschlusszapfen etc. bekannt. Die Rohranschlussöffnungen 64 weisen jeweils einen Kanal 66, 67 auf. Gemäß der ersten Ausgestaltung trennt sich der Einlaufkanal 66 in zwei separate Kanäle auf, welche mit dem jeweiligen Einlaufabschnitt 20 der beiden Messrohre 3 verbunden sind. Gleiches gilt auch für den Auslaufkanal 67. Der Auslaufkanal 67 weist zwei Kanäle auf, welche jeweils aus dem Auslaufabschnitt 21 der jeweiligen Messrohre 3 zusammenlaufen und eine der Rohranschlussöffnungen 64 bilden. Die Nennweite der Rohranschlussöffnungen 64 und die Nennweite der Messrohre 3 können unterscheiden. Die Fließrichtung des zu führenden Mediums durch die Rohranschlussöffnung 64 unterscheidet sich von der Fließrichtung des Mediums im Einlauf- und/oder Auslaufabschnitt 20, 21.

Die zweite Ausgestaltung weist eine identische Messrohranordnung 4 wie die erste Ausgestaltung auf und unterscheidet sich ausschließlich durch die Ausgestaltung der Verbindungsvorrichtung 63. Der Einlaufkanal 66 ist mit dem Einlaufabschnitt 20 des ersten Messrohres 3.1 verbunden. Der Auslaufkanal 67 der Verbindungsvorrichtung 5 ist mit dem Auslaufabschnitt 21 des zweiten Messrohres 3.2 verbunden. Ein Verbindungskanal 65 verbindet den Auslaufabschnitt 21 des ersten Messrohres 3.1 mit dem Einlaufabschnitt des zweiten Messrohres 3.2. Die Messrohranordnung 4 weist eine Spiegelebene auf, welche zwischen den beiden Messrohren 3.1, 3.2, parallel zu den jeweiligen Längsachsen der Schenkel 11 verläuft. Der Verbindungskanal 65 weist eine Längsachse auf, welche zur Spiegelebene der Messrohranordnung 4 geneigt ist.

An der Außenwandung des Verbindungskanales 65 ist ein Temperatursensor 77 möglichst nahe an dem zu führenden Medium angeordnet. Der Temperatursensor 77 kann beispielsweise ein Pt100 oder PT1 000 Element sein.

Die Verbindungsvorrichtung 63 weist einen Verbindungsvorrichtungskörper auf, welcher einen Kunststoff und bevorzugt Polyetheretherketone (PEEK), Polyaryletherketone (PAEK), Polyphenylsulfone (PPSU), Polyethersulfone (PESU), Polysulfone (PSU), Polyarylamide (PARA), Polypropylene (PP), Polycarbonate (PC), Polyethylene (PE), Fluoropolymere und/oder Hart-Polyethylene (HDPE) aufweist. Zudem weist die Messrohranordnung 4 einen Messrohranordnungskörper auf, der Stahl umfasst und insbesondere aus Stahl gebildet ist.

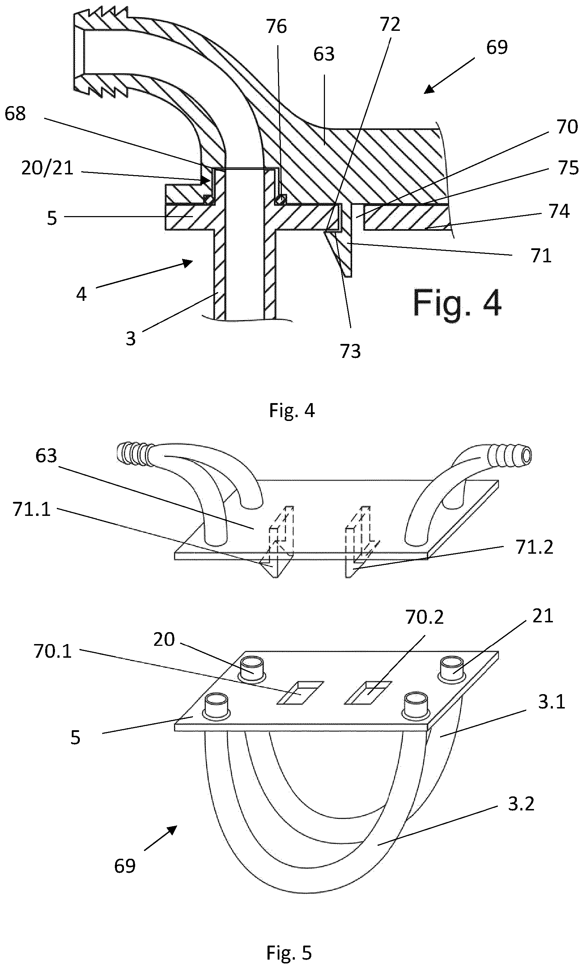

Die Verbindungsvorrichtung 63 ist über eine Verschlussvorrichtung zumindest formschlüssig mit der Fixierkörperanordnung 5 verbunden. Auf die Darstellung der Verschlussvorrichtung wurde in Fig. 1 bis 3 verzichtet. Eine detaillierte Abbildung einer Ausgestaltung wird in Fig. 4 und 5 gezeigt.

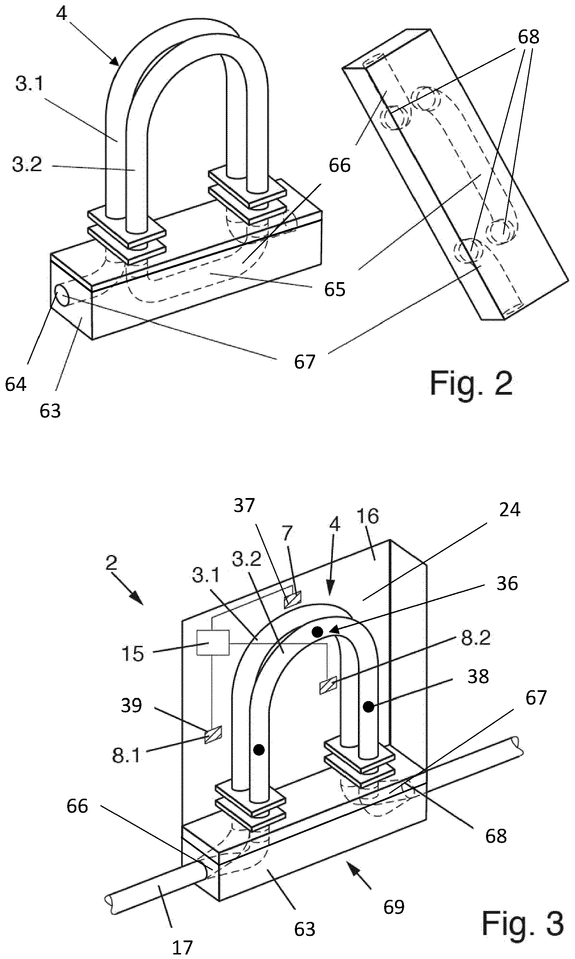

Die Fig. 2 zeigt zwei perspektivische Ansichten auf eine weitere Ausgestaltung des erfindungsgemäßen Messaufnehmers 69, insbesondere der Verbindungsvorrichtung 63. Die Messrohranordnung 4 ist im Wesentlichen identisch mit der in der Fig. 1 gezeigten Ausgestaltungen der Messrohranordnung 4. Die Verbindungsvorrichtung 63 ist massiv und quaderförmig ausgebildet. Der Einlaufkanal 66 und der Auslaufkanal 67 sind in der Verbindungsvorrichtung 63 eingearbeitet und weisen jeweils einen Bogen auf, bzw. sind L-förmig ausgebildet. Der Einlaufkanal 66 verbindet eine Messrohranschlussöffnung 68 mit einer Rohranschlussöffnung 64. Ebenso verbindet der Auslaufkanal 67 eine Messrohranschlussöffnung 68 mit einer Rohranschlussöffnung 64. Der Einlaufkanal 66 ist mit dem Einlaufabschnitt 20 des ersten Messrohres 3.1 verbunden. Der Auslaufkanal 67 ist mit dem Auslaufabschnitt 21 des ersten Messrohres 3.1 verbunden. Die Verbindungsvorrichtung 63 weist zudem einen Verbindungskanal 65 auf, welcher eine Längsachse aufweist, die mit den Längsachsen der Schenkel des zweiten Messrohres 3.2 in einer gemeinsamen Ebene liegt. Der Einlaufabschnitt 20 des zweiten Messrohres 3.2 ist über den Verbindungskanal 65 mit dem Auslaufabschnitt 21 des zweiten Messrohres 3.2 verbunden. Somit wird das zu führende Medium ausschließlich durch das erste Messrohr 3.1 geleitet.

Die Fig. 3 zeigt eine teilweise geschnittene, perspektivische Ansicht auf eine Ausgestaltung des Messgerätes 2, umfassend einen an einem Schlauch- und/oder Kunststoffrohrsystem 17 angeschlossenen Messaufnehmer 69. Wie zuvor ist die Messrohranordnung 4 des Messaufnehmers 69 identisch mit den in der Fig. 1 und Fig. 2 gezeigten Ausgestaltungen. Der Messaufnehmer 69 ist in eine Trägervorrichtung 16 eingesetzt, in welcher auch die Mess- und/oder Betriebsschaltung 15 angeordnet ist, welche mit dem Schwingungserreger 7 und den zwei Schwingungssensoren 8.1, 8.2 verbunden ist. Die Verbindungsvorrichtung 5 ist quaderförmig ausgebildet und weist einen Einlaufkanal 66 auf, der sich aufteilt und in die jeweiligen Einlaufabschnitte der beiden Messrohre 3.1, 3.2 erstreckt. Der Auslaufkanal 67 erstreckt sich ausgehend von den jeweiligen Auslauabschnitten 21 der Messrohre 3.1, 3.2 zur Rohranschlussöffnung 68.

An den Messrohren 3.1, 3.2 sind jeweils ein Erregermagnet 36 und zwei Sensormagnete 38 angeordnet, welche Komponenten des Schwingungserregers 7 und der zwei Schwingungssensoren 8.1, 8.2 sind. Der Schwingungserreger 7 umfasst eine Erregerspule 37. Die zwei Schwingungssensoren 8.1, 8.2 umfassen jeweils eine Sensorspule 39. Die Spulen 37, 39 sind alle in der Trägervorrichtung 16 angeordnet, bzw. in einer Wandung der Trägervorrichtung 16 versenkt. An den Messohren 3.1, 3.2 sind die Erregermagnete 36 und Sensormagnete 38 angeordnet. Die zwei Messrohre 3.1, 3.2 weisen jeweils eine Längsebene auf, welche gleichzeitig auch eine Spiegelebene ist. Diese jeweiligen Spiegelebenen teilen die Messrohre 3.1, 3.2 jeweils in zwei Seiten ein. An den sich abgewandten Seiten der zwei Messrohre 3.1, 3.2 sind jeweils drei Magnete angeordnet. Einer der drei Magnete ist eine Schwingungserregerkomponente und zwei der drei Magnete sind Schwingungssensorkomponenten.

Die elektronische Mess- und/oder Betriebsschaltung 15 dazu eingerichtet ist den Massedurchfluss, die Viskosität und/oder die Dichte und/oder die davon abgeleitete Größe eines fließfähigen Mediums zu ermitteln und bereitzustellen. Zudem ist die Mess- und/oder Betriebsschaltung 15 dazu ausgebildet ein Betriebssignal auf den Schwingungserreger 7 aufzubringen.

Die Fig. 4 zeigt einen Teilausschnitt eines Längsschnittes durch den erfindungsgemäßen Messaufnehmer 69. Der Messaufnehmer 69 umfasst eine Messrohranordnung 4 zum Führen des fließfähigen Mediums, eine Fixierkörperanordnung 5 und eine Verbindungsvorrichtung 63 zum lösbaren Verbinden der Messrohranordnung 4 mit einer Prozessleitung. Die Fixierkörperanordnung 5 ist mit mindestens einem Messrohr 3 im Einlaufabschnitt 20 und/oder im Auslaufabschnitt 21 verbunden und weist mindestens eine Öffnung 70 auf. Die Verbindungsvorrichtung 63 weist Messrohranschlussöffnungen 68 auf, an welche die Messrohranordnung 4 angeschlossen ist. Zudem ist die Verbindungsvorrichtung 63 mit dem mindestens einem Messrohr 3 im Einlaufabschnitt 20 und/oder im Auslaufabschnitt 21 verbunden. Die Verbindungsvorrichtung 63 weist mindestens eine Verschlussvorrichtung 71 auf, welche sich durch die Öffnung 70 der Fixierkörperanordnung 5 erstreckt und über welche die Verschlussvorrichtung 71 zumindest formschlüssig mit der Fixierkörperanordnung 5 verbunden ist. Die Fixierkörperanordnung 5 weist ein erste Fixierkörperanordnungsseite 74 und eine zweite Fixierkörperanordnungsseite 75 auf, wobei die erste Fixierkörperanordnungsseite 74 und die zweite Fixierkörperanordnungsseite 75 einander abgewandt sind. Die Öffnung 70 erstreckt sich von der ersten Fixierkörperanordnungsseite 74 zur zweiten Fixierkörperanordnungsseite 75. Die Verbindungsvorrichtung 63 weist eine Kontaktfläche 72 auf und die Fixierkörperanordnung 5 weist eine Berührfläche 73 an der ersten Fixierkörperanordnungsseite 74 auf, wobei sich die Kontaktfläche 72 und die Berührfläche 73 berühren. Die Verschlussvorrichtung 71 ist derart ausgebildet, dass nach dem Einrasten der Verschlussvorrichtung 71 die Verbindungsvorrichtung 63 über die Verschlussvorrichtung 71 eine Kraft auf die Fixierkörperanordnung 5 bewirkt mit einem Kraftanteil in Richtung der zweiten Fixierkörperanordnungsseite 75.

Die Verschlussvorrichtung 71 umfasst eine Rastnase, welche sich durch die Öffnung 70 erstreckt und mit der zweiten Fixierkörperanordnungsseite der Fixierkörperanordnung 5 verrastet ist. Die Verschlussvorrichtung 71 ist derart ausgebildet, dass sie sich beim Durchführen durch die Öffnung 70 bis zu einem Punkt elastisch verformt und dann einrastet, um somit die formschlüssige Verbindung zu bilden.

Zwischen Verbindungsvorrichtung 63 und der zweiten Fixierkörperanordnungsseite 75 der Fixierkörperanordnung 5 ist eine elastische Dichtung 76 - in Form eines Dichtringes - angeordnet. Die Dichtung 76 ist zwischen Verbindungsvorrichtung 63 und Fixierkörperanordnung 5 eingespannt und die Einspannung wird über den Formschluss gehalten.

Die Verbindungsvorrichtung 5 weist eine Messrohranschlussöffnung 68 auf, welche komplementär zum Einlaufabschnitt 20 eines Messrohres ausgebildet ist. Weiterhin weist die Verbindungsvorrichtung 5 eine Messrohranschlussöffnung 68 auf, welche komplementär zum Auslaufabschnitt 21 eines Messrohres ausgebildet ist. Im montierten Zustand sind der Einlaufabschnitt 20 und der Auslaufabschnitt 21 des Messrohres 3 in der jeweiligen zugeordneten Vertiefung angeordnet.

Die Fig. 5 zeigt eine Explosionsansicht einer Ausgestaltung des erfindungsgemäßen Messaufnehmers 69. Die Messrohranordnung 4 weist zwei zueinander parallel verlaufende Messrohre 3.1, 3.2 auf, welche jeweils im Einlaufabschnitt 20 einen Einlauf mit einer Einlaufrichtung und im Auslaufabschnitt 21 einen Auslauf mit einer Auslaufrichtung aufweisen. Zudem sind die zwei Messrohre 3.1, 3.2 zwischen Einlaufabschnitt 20 und Auslaufabschnitt 21 jeweils genau einmal gebogen. Dadurch ergibt sich, dass die Einlaufrichtung und die Auslaufrichtung entgegengesetzt orientiert sind. Die Fixierkörperanordnung 5 ist mit dem Einlaufabschnitt 20 und dem Auslaufabschnitt 21 der jeweiligen Messrohre 3.1, 3.2 verbunden. Die Verbindungsvorrichtung 63 weist genau zwei Verschlussvorrichtungen 71.1, 71.2 auf und die Fixierkörperanordnung 5 weist entsprechend genau zwei Öffnungen 70.1, 70.2 auf. Die Verschlussvorrichtungen sind jeweils als Rastnasen ausgebildet. In einem montierten Zustand erstrecken sich die zwei Verschlussvorrichtungen 71.1, 71.2 jeweils durch eine Öffnung 70 der zwei Öffnungen 70.1, 70.2. Dabei bewirkt die Verbindungsvorrichtung 63 über die zwei Verschlussvorrichtung 71.1, 71.2 jeweils eine Kraft auf die Fixierkörperanordnung 5 mit einem Kraftanteil in Richtung der zweiten Fixierkörperanordnungsseite 75.

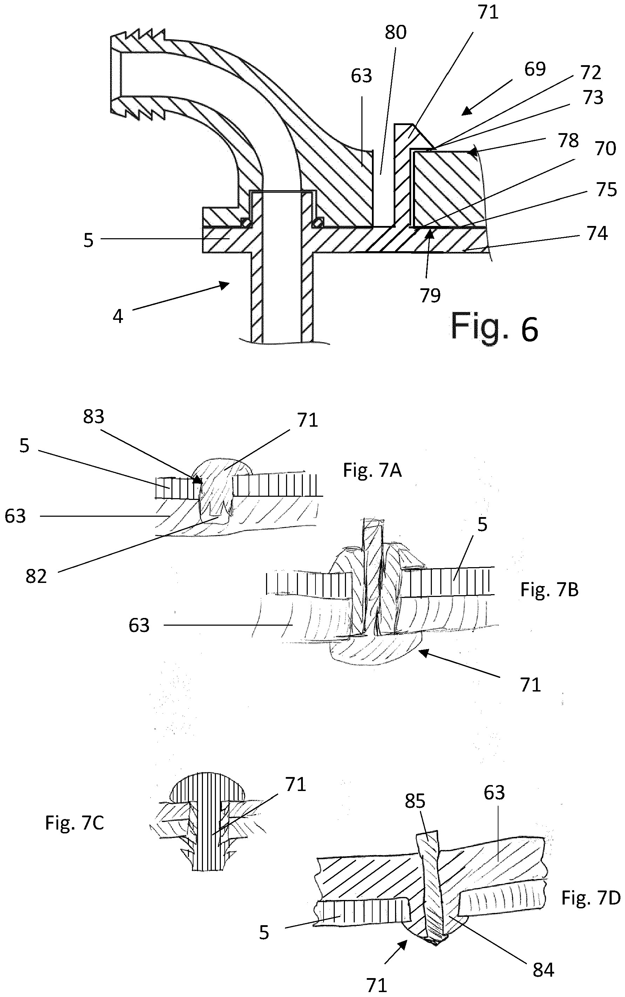

Die Fig. 6 zeigt einen Teilausschnitt eines Längsschnittes durch eine weitere Ausgestaltung des erfindungsgemäßen Messaufnehmers. Diese unterscheidet sich von der Ausgestaltung der Fig. 4 darin, dass an Stelle einer Fixierkörperanordnungsöffnung eine Verbindungsvorrichtungsöffnung 82 vorgesehen ist, die sich von einer ersten Verbindungsvorrichtungsseite 78 der Verbindungsvorrichtung 63 zu einer zweiten Verbindungsvorrichtungsseite 79 der Verbindungsvorrichtung 63 erstreckt, wobei die erste Verbindungsvorrichtungsseite 78 und die zweite Verbindungsvorrichtungsseite 79 einander abgewandt sind. Die Verschlussvorrichtung 71 erstreckt sich im zusammenmontierten Zustand durch die Verbindungsvorrichtungsöffnung 82 und ist federnd ausgebildet, so dass sie sich beim Einführen in die Verbindungsvorrichtungsöffnung 82 verdrängen lässt. Die Verbindungsvorrichtungsöffnung 82 kann konisch geformt sein. Eine Kontaktfläche 72 der Verschlussvorrichtung 71 und eine an der ersten Verbindungsvorrichtungsseite 78 befindliche Berührfläche 73 der Verbindungsvorrichtung 63 berühren sich. Um eine ausreichende Fixierung zu realisieren ist das Verschlusskonzept derart ausgebildet, dass die Messrohranordnung 4 über die Verschlussvorrichtung 71 eine Kraft auf die Verbindungsvorrichtung 63 mit einem Kraftanteil in Richtung der zweiten Verbindungsvorrichtungsseite 79 bewirkt. Die Verschlussvorrichtung 71 ist mit der Fixierkörperanordnung 5 monolithisch verbunden bzw. einstückig ausgebildet. Alternativ kann die Verschlussvorrichtung 71 stoffschlüssig mit der Fixierkörperanordnung 5 verbunden.

Die Fig. 7 A bis D zeigen jeweils schematische Längsschnittdarstellungen weiterer Ausgestaltungen der Verbindungsvorrichtung.

Die Fig. 7A zeigt eine Verbindungsvorrichtung 63 die eine als Sackloch ausgebildete Verbindungsvorrichtungsöffnung 82 aufweist und eine Fixierkörperanordnung 5, welche eine als Durchgangsloch ausgebildete Fixierkörperanordnungsöffnung 83 aufweist. Die Verschlussvorrichtung 71 ist eine als nicht lösbare Niete ausgebildete Spreizniete, welcher derart ausgebildet ist, dass die Schenkel im eingebauten Zustand gegen die Wandung der Sacklochbohrung drückt und somit für eine kraftschlüssige Verbindung sorgt.

Die Ausgestaltung der Fig. 7B unterscheidet sich von der Ausgestaltung der Fig. 7A im Wesentlichen darin, dass die Verbindungsvorrichtung 63 eine als Durchgangsloch ausgebildete Verbindungsvorrichtungsöffnung 82 aufweist und dass die Verschlussvorrichtung 71 zwei oder mehr Klemmschenkel 84 umfasst, die sich durch die Fixierkörperanordnungsöffnung 83 und durch die Verbindungsvorrichtungsöffnung 82 erstrecken. Alternativ können die Klemmschenkel 84 monolithisch mit der Verbindungsvorrichtung 63 verbunden sein (siehe Fig. 7D). Die Verschlussvorrichtung 71 ist mindestens zweiteilig ausgebildet und umfasst zusätzlich einen Stift 85, der sich durch die Fixierkörperanordnungsöffnung 83 und durch die Verbindungsvorrichtungsöffnung 82 erstreckt. Der Stift 85 ist dazu eingerichtet eine Kraft auf die zwei Klemmschenkel 84 radial zur Längsachse der Verbindungsvorrichtungsöffnung 82 zu bewirken. Der Stift 85 ist ein separates Bauteil und wird nach dem Durchführen der mindestens zwei Klemmschenkel durch die entsprechende Öffnung bzw. Öffnungen eingeführt. Der Stift 85 kann endseitig aufgeweitet sein, so dass sich der Stift 85 mit den Klemmschenkel 84 verharkt und so eine unlösbare Verbindung umsetzt.

Die Fig. 7C zeigt eine Verschlussvorrichtung 71 die als Tannenclips ausgebildet ist und Widerhaken aufweist, die zum Einen über eine Reibkraft und einen Formschluss ein Lösen der Verbindung erschwert. Dabei ist es unerheblich von welcher Fixierkörperanordnungsseite die Verschlussvorrichtung 71 durch die Verbindungsvorrichtungsöffnung 82 und Fixierkörperanordnungsöffnung 83 geführt wird. Das Zusammenwirken zwischen den Widerhaken und der Wandung des Durchgangsloches sorgt für eine formschlüssige Verbindung während die Widerhaken im Endbereich des Tannenclips für eine formschlüssige Verbindung sorgen.

Die Fig. 7D zeigt eine Ausgestaltung, welche sich von der in Fig. 7B im Wesentlichen dadurch unterscheidet, dass die Klemmschenkel 84 und die Verbindungsvorrichtung 63 einstückig ausgebildet sind. Die Klemmschenkel 84 sind federnd ausgebildet, so dass sie beim Einführen des Stiftes 85 in die vorgesehene Öffnung auseinanderspreizen und eine formschlüssige Verbindung zwischen der Fixierkörperanordnung 5 und der Verbindungsvorrichtung 63 bilden. Die Verschlussvorrichtung 71 kann derart hergestellt sein, dass der Stift 85 vor dem Fixieren ebenfalls mit der Verbindungsvorrichtung 63 monolithisch über z.B. Stützstrukturen verbunden ist. Beim Fixieren wird die Verbindung mit der Stützstruktur zumindest teilweise gelöst.

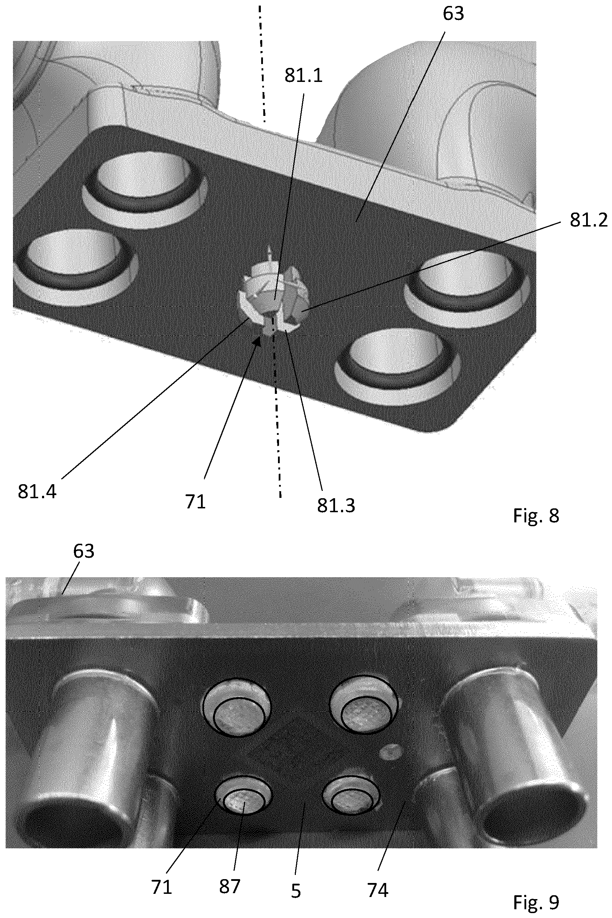

Die Fig. 8 zeigt eine perspektivische Ansicht auf eine weitere Ausgestaltung der Verschlussvorrichtung 71, die dazu eingerichtet ist, in eine Fixierkörperanordnungsöffnung der Fixierkörperanordnung eingeführt zu werden und eine Kraft auf die Fixierkörperanordnung zu bewirken mit einem Kraftanteil in Richtung der zweiten Fixierkörperanordnungsseite der Fixierkörperanordnung. Die Verschlussvorrichtung 71 ist mit der Verbindungsvorrichtung 63 monolithisch verbunden und durch mindestens eine Rastnase 81 bzw. vier Rastnasen 81.1, 81.2, 81.3, 81.4 gebildet. Die vier Rastnasen 81.1, 81.2, 81.3, 81.4 weisen jeweils eine gleiche Länge auf und sind rotationssymmetrsich um eine Rotationsachse angeordnet, welche parallel zu einer Längsachse der nicht abgebildeten Messrohranordnung verläuft. Zudem weisen die vier Rastnasen 81.1, 81.2, 81.3, 81.4 jeweils Berührflächen auf, welche die Form eines Kreisringsegmentes oder eines Ausschnittes einer abgewickelten Mantelfläche eines Kegelstumpfes aufweisen. Die Verschlussvorrichtung 71 ist zentral angeordnet und kann ein Durchgangsloch für einen Stift aufweisen, der dazu eingerichtet ist die vier Rastnasen 81.1, 81.2, 81.3, 81.4 aufzuspreizen.

Die Fig. 9 zeigt eine perspektivische Ansicht auf eine weitere Ausgestaltung der erfindungsgemäßen Verbindungsvorrichtung, die mittels Ultraschallnieten derart verformt ist, dass ein Endabschnitt der Verschlussvorrichtung 71 einen größere Querschnittsfläche aufweist als eine Querschnittsfläche der Fixierkörperanordnungsöffnung oder der Verbindungsvorrichtungsöffnung. Beim Verformen eines Abschnittes der Verschlussvorrichtung mittels einer Sonotrode kann es bei passender Wahl des Materials der Verschlussvorrichtung 71 zu einem abschnittsweise Schmelzen der Verschlussvorrichtung 71 kommen. Dies erfolgt insbesondere im Kontaktbereich zwischen Verschlussvorrichtung 71 und Fixierkörperanordnung 5. Die Verschlussvorrichtung 71 bildet somit eine stoffschlüssige Verbindung mit der ersten Fixierkörperanordnungsseite 74. Weiterhin weist die Verschlussvorrichtung 71 in einem Endbereich eine geriffelte Oberfläche 87 auf. Die abgebildete Verschlussvorrichtung 71 ist nietenförmig, insbesondere als Flachrundniet nach DIN 674 ausgebildet. Weiterhin werden vier Verschlussvorrichtungen zur Verbindung der Fixierkörperanordnung 5 mit der Verbindungsvorrichtung 63 verwendet. Die vier Verschlussvorrichtungen bilden die vier Ecken eines Rechteckes und sind symmetrisch zu einer Spiegelebene der Messrohranordnung angeordnet.

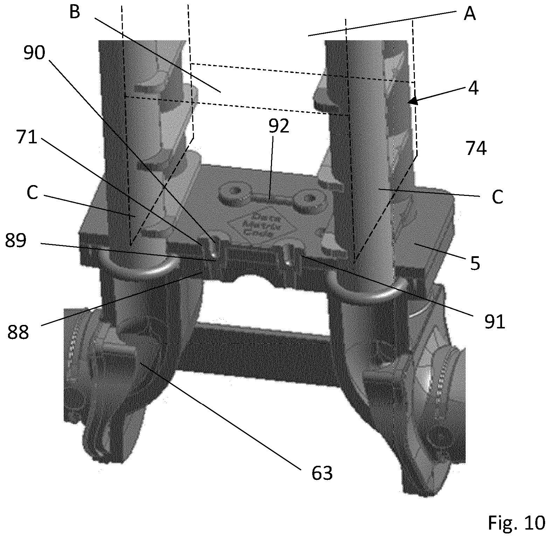

Die Fig. 10 zeigt eine zumindest teilweise geschnittene Ansicht auf eine weitere Ausgestaltung der erfindungsgemäßen Verbindungsvorrichtung 63, die als Hohlkörper ausgebildet ist und eine Verbindungsvorrichtungswandstärke aufweist. Die abgebildete Verschlussvorrichtung 71 weist eine Verschlussvorrichtungswandstärke auf, die immer kleiner gleich einer maximalen Verbindungsvorrichtungswandstärke der Verbindungsvorrichtung 63 ist. Weiterhin weist die Verschlussvorrichtung 71 zumindest abschnittsweise einen Verschlussvorrichtungsdurchmesser auf, der größer gleich dem zweifachen der maximalen Verbindungsvorrichtungswandstärke ist. In diesem Abschnitt weist die Verschlussvorrichtung 71 ein Sackloch - alternativ könnte auch ein Durchgangsloch vorgesehen werden - aufweist, welches sich durch die Fixierkörperanordnungsöffnung 70 erstreckt und welche die Verschlussvorrichtungswandstärke begrenzt. Die abgebildete Verbindungsvorrichtung 63 weist weiterhin mindestens eine Öffnung 88 - in dem Fall sind es genau vier Öffnungen - auf. Die zwei abgebildeten Verschlussvorrichtungen 71 umfassen jeweils zwei Zapfen, die sich durch die vier Öffnungen erstrecken. Die zwei jeweils zusammen eine Verschlussvorrichtung 71 bildenden Zapfen 89 sind über ein Verbindungselement verbunden. In dem Fall ist das Verbindungselement als Bügelelement ausgebildet, welches die mindestens zwei Zapfen miteinander verbindet. Alternativ die Verschlussvorrichtung 71 mindestens vier Zapfen aufweisen, welche über ein insbesondere plattenförmiges Verbindungselement miteinander verbunden sind. Abgebildet werden zwei Verschlussvorrichtungen, alternativ kann auch nur eine Verschlussvorrichtung vorgesehen werden, umfassend genau einen oder genau zwei Zapfen. In einer Ausgestaltung mit vier Zapfen können diese über vier Bügelelemente miteinander verbunden sein, wobei die vier Bügelelemente ein Viereck, insbesondere ein Rechteck bilden. In der Abbildung weisen die Zapfen jeweils eine Zapfenöffnung 90 auf, die derart ausgestaltet ist, dass eine Zapfenwandstärke in einem Endbereich des Zapfens 89 immer kleiner gleich als eine maximale Zapfenwandstärke ist. Weiterhin sind die Öffnungen 88 und Zapfen 89 symmetrisch zu einer Spiegelebene der Messrohranordnung 4 angeordnet sind. Dies sorgt dafür, dass der Nullpunktfehler des Durchflussmesssignales reduziert wird. Die Zapfen 89 weisen jeweils einen Kopf auf, welcher an einer der ersten Fixierkörperanordnungsseite 74 zugewandten Zapfenseite eine Hinterschneidung 91 aufweist, d.h. dass der Zapfen in diesem Teilabschnitt nicht in Kontakt mit der metallischen Fixierkörperanordnung 5 steht. Die Verschlussvorrichtung 71, insbesondere die Zapfen sind mittels Ultraschallschweißen derart mit der Verbindungsvorrichtung 63 verbunden, dass eine stoffschlüssig Verbindung ausgebildet ist.

### Bezugszeichenliste

Koppleranordnung 1
Messgerät 2
Messrohr 3
Messrohranordnung 4
Fixierkörperanordnung 5
Kopplerelement 6
Schwingungserreger 7
Schwingungssensor 8
Schenkel 11
Messrohrkörper 13
Mess- und/oder Betriebsschaltung 15
Trägervorrichtung 16
Schlauch- und/oder Kunststoffrohrsystem 17
Einlaufabschnitt 20
Auslaufabschnitt 21
Aufnahme 29
Erregermagnet 36
Erregerspule 37
Sensormagnet 38
Sensorspule 39
Auswerteschaltung 53
Verbindungsvorrichtung 63
Rohranschlussöffnung 64
Verbindungskanal 65
Einlaufkanal 66
Auslaufkanal 67
Messrohranschlussöffnungen 68
Messaufnehmer 69
Öffnung 70
Verschlussvorrichtung 71
Kontaktfläche 72
Berührfläche 73
erste Fixierkörperanordnungsseite 74
zweite Fixierkörperanordnungsseite 75
Dichtung 76
Temperatursensor 77
erste Verbindungsvorrichtungsseite 78
zweite Verbindungsvorrichtungsseite 79
Rastnase 81
Verbindungsvorrichtungsöffnung 82
Fixierkörperanordnungsöffnung 83
Klemmschenkel 84
Stift 85
Spreizschenkel 86
geriffelte Oberfläche 87
Öffnung 88
Zapfen 89
Zapfenöffnung 90
Hinterschneidung 91
Bügelelement 92
Messrohrspiegelebene A
Messrohrspiegelebene B
Messrohrebene C
Messrohrebene D

## Patentansprüche

1. Messaufnehmer (69) eines Messgerätes (2) zum Erfassen eines Massedurchflusses, einer Viskosität, einer Dichte und/oder einer davon abgeleiteten Größe eines fließfähigen Mediums, umfassend:
- eine Messrohranordnung (4) zum Führen des fließfähigen Mediums,
wobei die Messrohranordnung (4) mindestens ein Messrohr (3) aufweist,
wobei das mindestens eine Messrohr (3) einen Einlaufabschnitt (20) und einen Auslaufabschnitt (21) aufweist;
- mindestens eine erste Erregerkomponente eines Schwingungserregers (7) zum Anregen des mindestens einen Messrohres (3) in Schwingungen,
wobei die mindestens eine Erregerkomponente an dem mindestens einen Messrohr (3) angeordnet ist;
- mindestens eine erste Sensorkomponente eines Schwingungssensors (8) zum Erfassen der Schwingungen des mindestens einen Messrohres (3),
wobei die mindestens eine erste Sensorkomponente an dem mindestens einen Messrohr (3) angeordnet ist;
- eine Fixierkörperanordnung (5),
wobei die Fixierkörperanordnung (5) mit dem mindestens einen Messrohr (3) im Einlaufabschnitt (20) und im Auslaufabschnitt (21) verbunden ist;
**gekennzeichnet durch**
- eine Verbindungsvorrichtung (63) zum lösbaren Verbinden der Messrohranordnung (4) mit einer Prozessleitung,
wobei die Verbindungsvorrichtung (63) Messrohranschlussöffnungen (68) aufweist, an welche die Messrohranordnung (4) angeschlossen ist,
wobei die Verbindungsvorrichtung (63) mit dem mindestens einem Messrohr (3) im Einlaufabschnitt (20) und im Auslaufabschnitt (21) verbunden ist; und
wobei der Messaufnehmer eine Verschlussvorrichtung (71) umfasst,
wobei über die Verschlussvorrichtung (71) eine formschlüssige und/oder kraftschlüssige Verbindung zwischen der Verbindungsvorrichtung (63) und der Fixierkörperanordnung (5) ausgebildet ist.

2. Messaufnehmer (69) nach dem vorherigen Anspruch,
wobei die Fixierkörperanordnung (5) ein erste Fixierkörperanordnungsseite (74) und eine zweite Fixierkörperanordnungsseite (75) aufweist,
wobei die erste Fixierkörperanordnungsseite (74) und die zweite Fixierkörperanordnungsseite (75) einander abgewandt sind,
wobei sich eine Fixierkörperanordnungsöffnung (70) von der ersten Fixierkörperanordnungsseite (74) zur zweiten Fixierkörperanordnungsseite (75) erstreckt,
wobei sich die Verschlussvorrichtung (71) durch die Fixierkörperanordnungsöffnung (70) erstreckt,
wobei die Verbindungsvorrichtung (63) eine Kontaktfläche (72) aufweist,
wobei die Fixierkörperanordnung (5) an der ersten Fixierkörperanordnungsseite (74) eine Berührfläche (73) aufweist,
wobei sich die Kontaktfläche (72) und die Berührfläche (73) berühren.

3. Messaufnehmer (69) nach Anspruch 2,
wobei die Verbindungsvorrichtung (63) über die Verschlussvorrichtung (71) eine Kraft auf die Fixierkörperanordnung (5) bewirkt mit einem Kraftanteil in Richtung der zweiten Fixierkörperanordnungsseite (75),
wobei die Verschlussvorrichtung (71) insbesondere stoffschlüssig mit der Verbindungsvorrichtung verbunden ist oder mit der Verbindungsvorrichtung (63) monolithisch verbunden ist.

4. Messaufnehmer (69) nach Anspruch 1,
wobei die Verbindungsvorrichtung (63) ein erste Verbindungsvorrichtungsseite (78) und eine zweite Verbindungsvorrichtungsseite (79) aufweist,
wobei die erste Verbindungsvorrichtungsseite (78) und die zweite Verbindungsvorrichtungsseite (79) einander abgewandt sind,
wobei sich eine Verbindungsvorrichtungsöffnung (82) von der ersten Verbindungsvorrichtungsseite (78) zur zweiten Verbindungsvorrichtungsseite (79) erstreckt,
wobei sich die Verschlussvorrichtung (71) durch die Verbindungsvorrichtungsöffnung (82) erstreckt,
wobei die Verschlussvorrichtung (71) eine Kontaktfläche (72) aufweist,
wobei die Verbindungsvorrichtung (63) an der ersten Verbindungsvorrichtungsseite (78) eine Berührfläche (73) aufweist,
wobei sich die Kontaktfläche (72) und die Berührfläche (73) berühren.

5. Messaufnehmer (69) nach Anspruch 4,
wobei die Messrohranordnung (4) über die Verschlussvorrichtung (71) eine Kraft auf die Verbindungsvorrichtung (63) bewirkt mit einem Kraftanteil in Richtung der zweiten Verbindungsvorrichtungsseite (79),
wobei die Verschlussvorrichtung (71) insbesondere stoffschlüssig mit der Fixierkörperanordnung (5) verbunden ist oder mit der Fixierkörperanordnung (5) monolithisch verbunden ist.

6. Messaufnehmer (69) nach mindestens einem der vorherigen Ansprüche,
wobei die Verschlussvorrichtung (71) mindestens eine Rastnase (81) umfasst.

7. Messaufnehmer (69) nach dem Anspruch 6,
wobei die Verschlussvorrichtung (71) mindestens vier Rastnasen (81.1, 81.2, 81.3, 81.4) umfasst, welche rotationssymmetrisch um eine Rotationsachse angeordnet sind,
wobei die Rotationsachse parallel zu einer Längsachse der Messrohranordnung (4) verläuft.

8. Messaufnehmer (69) nach Anspruch 1,
wobei die Verbindungsvorrichtung (63) eine, insbesondere als Durchgangsloch ausgebildete Verbindungsvorrichtungsöffnung (82) aufweist,
wobei die Fixierkörperanordnung (5) eine, insbesondere als Durchgangsloch ausgebildete Fixierkörperanordnungsöffnung (83) aufweist,
wobei die Verschlussvorrichtung (71) mindestens einen Klemmschenkel (84) umfasst,
wobei sich der mindestens eine Klemmschenkel (84) durch die Fixierkörperanordnungsöffnung (83) und zumindest teilweise durch die Verbindungsvorrichtungsöffnung (82) erstreckt,
wobei die Verschlussvorrichtung (71) einen Stift (85) umfasst,
wobei sich der Stift (85) durch die Fixierkörperanordnungsöffnung (83) und zumindest teilweise durch die Verbindungsvorrichtungsöffnung (82) erstreckt und dazu eingerichtet ist eine Kraft auf den mindestens einen Klemmschenkel (84) radial zur Längsachse der Verbindungsvorrichtungsöffnung (82) zu bewirken.

9. Messaufnehmer (69) nach Anspruch 1 und/oder 8,
wobei die Verschlussvorrichtung (71) eine, insbesondere nicht lösbare Niete, vorzugsweise Spreizniete umfasst.

10. Messaufnehmer (69) nach Anspruch 1,
wobei die Verschlussvorrichtung (71) mindestens einen spreizbaren und insbesondere monolitisch mit der Verbindungsvorrichtung verbundenen Spreizschenkel (85) aufweist,
wobei die Verschlussvorrichtung (71) eine Verbindungsvorrichtungsöffnung (82) aufweist,
wobei die Fixierkörperanordnung (71) eine Fixierkörperanordnungsöffnung (83) aufweist,
wobei sich der mindestens eine Spreizschenkel (85) durch die Fixierkörperanordnungsöffnung (83) erstreckt,
wobei die Verschlussvorrichtung (71) einen Stift (85) umfasst,
wobei der Stift (85) in der Verbindungsvorrichtungsöffnung (82) angeordnet ist und dazu eingerichtet ist eine radiale Kraft auf den mindestens einen Spreizschenkel (86) zu bewirken.

11. Messaufnehmer (69) nach Anspruch 1,
wobei die Verschlussvorrichtung (71) mindestens einen Tannenclips umfasst.

12. Messaufnehmer (69) nach mindestens einem der vorhergehenden Ansprüche,
wobei die Fixierkörperanordnung (5) ein erste Fixierkörperanordnungsseite (74) und eine zweite Fixierkörperanordnungsseite (75) aufweist,
wobei die erste Fixierkörperanordnungsseite (74) und die zweite Fixierkörperanordnungsseite (75) einander abgewandt sind,
wobei zwischen Verbindungsvorrichtung (63) und der zweiten Fixierkörperanordnungsseite (75) eine, insbesondere elastische Dichtung (76) angeordnet ist,
wobei die Dichtung (76) zwischen Verbindungsvorrichtung (63) und Fixierkörperanordnung (5) eingespannt ist und die Einspannung über den Formschluss gehalten wird.

13. Messaufnehmer (69) nach mindestens einem der Ansprüche 2 bis 12,
wobei die Verschlussvorrichtung (71) insbesondere mittels Ultraschallnieten derart verformt ist, dass ein Endabschnitt der Verschlussvorrichtung (71) einen größere Querschnittsfläche aufweist als eine Querschnittsfläche der Fixierkörperanordnungsöffnung (70) oder der Verbindungsvorrichtungsöffnung (82).

14. Messaufnehmer (69) nach mindestens einem der vorherigen Ansprüche,
wobei die Verschlussvorrichtung (71) eine stoffschlüssige Verbindung mit der ersten Fixierkörperanordnungsseite (74) bildet.

15. Messaufnehmer (69) nach Anspruch 13 und/oder 14,
wobei die Verschlussvorrichtung (71) in einem Endbereich eine geriffelte Oberfläche (87) aufweist.

16. Messaufnehmer (69) nach mindestens einem der vorherigen Ansprüche,
wobei die Verschlussvorrichtung (71) eine Verschlussvorrichtungswandstärke aufweist,
wobei die Verbindungsvorrichtung (63) zumindest teilweise als Hohlkörper ausgebildet ist und eine Verbindungsvorrichtungswandstärke aufweist,
wobei die Verschlussvorrichtungswandstärke immer kleiner gleich einer maximalen Verbindungsvorrichtungswandstärke ist.

17. Messaufnehmer (69) nach Anspruch 16,
wobei die Verschlussvorrichtung (71) einen Verschlussvorrichtungsdurchmesser aufweist,
wobei der Verschlussvorrichtungsdurchmesser größer gleich dem zweifachen der maximalen Verbindungsvorrichtungswandstärke ist,
wobei die Verschlussvorrichtung (71) ein Sackloch oder ein Durchgangsloch aufweist, welches sich durch die Fixierkörperanordnungsöffnung (70) erstreckt und welche die Verschlussvorrichtungswandstärke begrenzt.

18. Messaufnehmer (69) nach mindestens einem der vorherigen Ansprüche,
wobei die Verbindungsvorrichtung mindestens eine Öffnung (88) aufweist,
wobei sich die Verschlussvorrichtung (71) durch die mindestens eine Öffnung (88) erstreckt.

19. Messaufnehmer (69) nach mindestens einem der vorherigen Ansprüche,
wobei die Verbindungsvorrichtung mindestens zwei Öffnungen (88) aufweist,
wobei die Verschlussvorrichtung (71) mindestens zwei Zapfen (89) umfasst,
wobei sich die mindestens zwei Zapfen (89) durch die mindestens zwei Öffnungen (88) erstrecken,
wobei die Verschlussvorrichtung (71) ein Verbindungselement, insbesondere ein Bügelelement (92) aufweist, welches die mindestens zwei Zapfen (89) miteinander verbindet.

20. Messaufnehmer (69) nach mindestens einem der vorherigen Ansprüche,
wobei die Verbindungsvorrichtung (63) mindestens vier Öffnungen (88) aufweist,
wobei die Verschlussvorrichtung (71) mindestens vier Zapfen (89) aufweist, welche über mindestens vier Bügelelemente (92) miteinander verbunden sind.

21. Messaufnehmer (69) nach mindestens einem der Ansprüche 1 bis 18,
wobei die Verbindungsvorrichtung (63) mindestens vier Öffnungen (88) aufweist,
wobei die Verschlussvorrichtung (71) mindestens vier Zapfen (89) aufweist, welche über ein insbesondere plattenförmiges Verbindungselement miteinander verbunden sind.

22. Messaufnehmer (69) nach mindestens einem der Ansprüche 19 bis 21,
wobei der mindestens eine Zapfen (89) eine Zapfenöffnung (90) aufweist, die derart ausgestaltet ist, dass eine Zapfenwandstärke in einem Endbereich des mindestens einen Zapfens (89) immer kleiner gleich als eine maximale Zapfenwandstärke ist.

23. Messaufnehmer (69) nach mindestens einem der Ansprüche 19 bis 22,
wobei die Öffnungen (88) und Zapfen (89) symmetrisch zu einer Spiegelebene der Messrohranordnung (4) angeordnet sind.

24. Messaufnehmer (69) nach mindestens einem der Ansprüche 19 bis 23,
wobei der mindestens eine Zapfen (89) einen Kopf aufweist, welcher an einer der ersten Fixierkörperanordnungsseite (74) zugewandten Zapfenseite eine Hinterschneidung (91) aufweist, die nicht in Kontakt mit der Fixierkörperanordnung (5) steht.

25. Messaufnehmer (69) nach mindestens einem der vorherigen Ansprüche,
wobei der mindestens eine Zapfen (89) mittels Ultraschallschweißen derart mit der Verbindungsvorrichtung (63) verbunden ist, dass eine stoffschlüssig Verbindung ausgebildet ist.

26. Messaufnehmer (69) nach mindestens einem der vorherigen Ansprüche,
wobei die Messrohranordnung (4) zwei gebogene Messrohre (3) umfasst,
wobei durch die zwei Messrohre (3) jeweils eine Messrohrspiegelebene (A, B) verläuft,
wobei der mindestens eine Zapfen (89) innerhalb eines durch die beiden Messrohrspiegelebenen (A, B) begrenzenden Abschnittes oder mindestens eine der Messrohrspiegelebenen (A, B) schneidend angeordnet ist,
wobei zwei senkrecht zu den Messrohrspiegelebenen (A, B) verlaufende Messrohrebenen (C, D) einen Bereich eingrenzen in dem der mindestens eine Zapfen (89) angeordnet ist,
wobei eine der Messrohrebenen (C) die Einläufe der Messrohre (3) und eine der Messrohrebenen (D) jeweils die Ausläufe der Messrohre (3) schneidet.

27. Messaufnehmer (69) nach mindestens einem der vorhergehenden Ansprüche,
wobei die Verbindungsvorrichtung (63) einen Verbindungsvorrichtungskörper aufweist,
wobei die Verbindungsvorrichtungskörper einen Kunststoff, bevorzugt Polyetheretherketone (PEEK), Polyaryletherketone (PAEK), Polyphenylsulfone (PPSU), Polyethersulfone (PESU), Polysulfone (PSU), Polyarylamide (PARA), Polypropylene (PP), Polycarbonate (PC), Polyethylene (PE), Fluoropolymere und/oder Hart-Polyethylene (HDPE) aufweist,
wobei die Messrohranordnung (4) einen Messrohranordnungskörper aufweist,
wobei der Messrohranordnungskörper metallisch ausgebildet ist, insbesondere Stahl aufweist.

28. Messgerät (2) zum Erfassen eines Massedurchflusses, einer Viskosität, einer Dichte und/oder einer davon abgeleiteten Größe eines fließfähigen Mediums, insbesondere ein Coriolis-Durchflussmessgerät umfassend:
- eine Trägervorrichtung (16);
- einen Messaufnehmer (69) nach mindestens einem der vorhergehenden Ansprüche;
- mindestens eine zweite Erregerkomponenten des Schwingungserregers (7); und
- mindestens eine zweite Sensorkomponente des Schwingungssensors (8);
wobei die Trägervorrichtung (16) einen Trägervorrichtungskörper mit einer Aufnahme (29) aufweist,
wobei der Messaufnehmer (69) in der Aufnahme (29) angeordnet und mechanisch trennbar mit dem Trägervorrichtungskörper verbindbar ist;
wobei die zweite Erregerkomponente an dem Trägervorrichtungskörper angeordnet ist,
wobei die zweite Sensorkomponente an dem Trägervorrichtungskörper angeordnet ist,
wobei der Schwingungserreger (7) eine Betriebsschaltung (15) umfasst, welche mit zumindest einer Erregerkomponente, insbesondere der zweiten Erregerkomponente des Schwingungserregers (7) verbunden ist,
wobei der Schwingungssensor (8) eine Messschaltung (15) umfasst, welche zumindest mit einer Sensorkomponente, insbesondere der zweiten Sensorkomponente des Schwingungssensors (8) elektrisch verbunden ist.

## Claims

1. A measuring sensor (69) of a measuring device (2) for detecting a mass flow, a viscosity, a density and/or a variable derived therefrom of a flowable medium, comprising:
- a measuring tube arrangement (4) for conducting the flowable medium,
the measuring tube arrangement (4) having at least one measuring tube (3),
the at least one measuring tube (3) having an inlet section (20) and an outlet section (21);
- at least one first exciter component of a vibration exciter (7) for exciting the at least one measuring tube (3) into vibrations,
wherein the at least one excitation component is arranged on the at least one measuring tube (3);
- at least one first sensor component of a vibration sensor (8) for detecting the vibrations of the at least one measuring tube (3),
wherein the at least one first sensor component is arranged on the at least one measuring tube (3);
- a fixing body arrangement (5),
the fixing body arrangement (5) being connected to the at least one measuring tube (3) in the inlet section (20) and in the outlet section (21);
**characterized in**
- a connecting device (63) for detachably connecting the measuring tube arrangement (4) to a process line,
wherein the connecting device (63) having measuring tube connection openings (68) to which the measuring tube arrangement (4) is connected,
wherein the connecting device (63) is connected to the at least one measuring tube (3) in the inlet section (20) and in the outlet section (21); and
wherein the measuring sensor comprises a closure device (71),
wherein a form-locking and/or force-locking connection between the connecting device (63) and the fixing body arrangement (5) is formed by wayof the closure device (71).

2. Measuring sensor (69) according to the previous claim,
wherein the fixing body arrangement (5) has a first fixing body arrangement side (74) and a second fixing body arrangement side (75),
wherein the first fixing body arrangement side (74) and the second fixing body arrangement side (75) face away from each other,
a fixing body arrangement opening (70) extends from the first fixing body arrangement side (74) to the second fixing body arrangement side (75),
the closure device (71) extends through the fixing body arrangement opening (70),
the connecting device (63) has a contact surface (72),
the fixing body arrangement (5) having a contact surface (73) on the first fixing body arrangement side (74),
the contact surface (72) and the contact surface (73) touching.

3. Measuring sensor (69) according to claim 2,
the connecting device (63) effects a force on the fixing body arrangement (5) via the closing device (71) with a force component in the direction of the second fixing body arrangement side (75),
the closing device (71) being connected in particular in a materially integral manner to the connecting device or being monolithically connected to the connecting device (63).

4. Measuring sensor (69) according to claim 1,
wherein the connecting device (63) comprises a first connecting device side (78) and a second connecting device side (79),
wherein the first connecting device side (78) and the second connecting device side (79) face away from each other,
a connector opening (82) extending from the first connector side (78) to the second connector side (79),
the closure device (71) extending through the connector opening (82),
the closure device (71) having a contact surface (72),
the connector (63) having a contact surface (73) on the first connector side (78),
the contact surface (72) and the contact surface (73) being in contact.

5. Measuring sensor (69) according to claim 4,
wherein the measuring tube arrangement (4) exerts a force on the connecting device (63) via the closure device (71) with a force component in the direction of the second connecting device side (79),
the shutter device (71) being connected to the fixing body arrangement (5), in particular in a materially integral manner, or being monolithically connected to the fixing body arrangement (5).

6. Measuring sensor (69) according to at least one of the previous claims,
wherein the closure device (71) comprises at least one latching nose (81).

7. Measuring sensor (69) according to claim 6,
wherein the closure device (71) comprises at least four latching lugs (81.1, 81.2, 81.3, 81.4) which are arranged rotationally symmetrically about an axis of rotation,
with the axis of rotation running parallel to a longitudinal axis of the measuring tube arrangement (4).

8. Measuring sensor (69) according to claim 1,
wherein the connecting device (63) has a connecting device opening (82) configured in particular as a through-hole,
wherein the fixing body arrangement (5) has a fixing body arrangement opening (83) configured in particular as a through-hole,
the closure device (71) comprising at least one clamping leg (84),
the at least one clamping leg (84) extending through the fixing body arrangement opening (83) and at least partially through the connecting device opening (82),
the closure device (71) comprising a pin (85),
the pin (85) extending through the fixation body arrangement opening (83) and at least partially through the connecting device opening (82) and being adapted to exert a force on the at least one clamping leg (84) radially to the longitudinal axis of the connecting device opening (82).

9. Measuring sensor (69) according to claim 1 and/or 8,
wherein the closure device (71) comprises a, in particular non-detachable, rivet, preferably an expanding rivet.

10. Measuring sensor (69) according to claim 1,
wherein the closure device (71) has at least one expandable leg (85) which can expand and is in particular monolithically connected to the connecting device,
wherein the closure device (71) has a connecting device opening (82),
the fixation body assembly (71) having a fixation body assembly opening (83),
the at least one expansion leg (86) extending through the fixation body assembly opening (83), the closure device (71) comprising a pin (85),
said pin (85) being disposed in said fastener aperture (82) and adapted to effect a radial force on said at least one expansion leg (86).

11. Measuring sensor (69) according to claim 1,
said locking device (71) comprising at least one fir-tree clip.

12. Measuring sensor (69) according to at least one of the preceding claims,
wherein the fixing body arrangement (5) has a first fixing body arrangement side (74) and a second fixing body arrangement side (75),
wherein the first fixing body arrangement side (74) and the second fixing body arrangement side (75) face away from each other,
wherein a seal (76), in particular an elastic seal, is arranged between the connecting device (63) and the second fixing body arrangement side (75),
wherein the seal (76) is clamped between the connecting device (63) and the fixing body arrangement (5) and the clamping is held by means of the form fit.

13. Measuring sensor (69) according to at least one of claims 2 to 12,
wherein the closure device (71) is deformed, in particular by means of ultrasonic riveting, in such a way that an end section of the closure device (71) has a larger cross-sectional area than a cross-sectional area of the fixing body arrangement opening (70) or of the connection device opening (82).

14. Measuring sensor (69) according to at least one of the previous claims,
wherein the locking device (71) forms an integral connection with the first fixing body arrangement side (74).

15. A sensor (69) according to claim 13 and/or 14,
wherein the closure device (71) has a corrugated surface (87) in an end region.

16. Measuring sensor (69) according to at least one of the previous claims,
wherein the closure device (71) has a closure device wall thickness,
wherein the connecting device (63) is at least partially formed as a hollow body and has a connecting device wall thickness,
wherein the closure device wall thickness is always less than or equal to a maximum connection device wall thickness.

17. Measuring sensor (69) according to claim 16,
wherein the closure device (71) has a closure device diameter,
wherein the closure device diameter is greater than or equal to twice the maximum connection device wall thickness,
wherein the closure device (71) comprises a blind hole or a through hole which extends through the fixation body array aperture (70) and which limits the closure device wall thickness.

18. Measuring sensor (69) according to at least one of the previous claims,
wherein the connecting device comprises at least one aperture (88),
the closure device (71) extending through the at least one opening (88).

19. Measuring sensor (69) according to at least one of the previous claims,
the connecting device having at least two openings (88),
the closure device (71) comprising at least two tabs (89),
the at least two pins (89) extending through the at least two openings (88),
the closure device (71) having a connecting element, in particular a shackle element (92), which connects the at least two pins (89) to one another.

20. Measuring sensor (69) according to at least one of the previous claims,
wherein the connecting device (63) has at least four openings (88),
wherein the closure device (71) has at least four pins (89) which are connected to one another via at least four shackle elements (92).

21. Measuring sensor (69) according to at least one of claims 1 to 18,
wherein the connecting device (63) has at least four openings (88),
wherein the closure device (71) has at least four pegs (89) which are connected to one another via a connecting element, in particular a plate-like connecting element.

22. Measuring sensor (69) according to at least one of claims 19 to 21,
wherein the at least one pin (89) has a pin opening (90) which is configured in such a way that a pin wall thickness in an end region of the at least one pin (89) is always less than or equal to a maximum pin wall thickness.

23. Measuring sensor (69) according to at least one of claims 19 to 22,
wherein the openings (88) and pegs (89) are arranged symmetrically with respect to a mirror plane of the measuring tube arrangement (4).

24. Measuring sensor (69) according to at least one of claims 19 to 23,
wherein the at least one pin (89) has a head which, on a pin side facing the first fixing body arrangement side (74), has an undercut (91) which is not in contact with the fixing body arrangement (5).

25. Measuring sensor (69) according to at least one of the previous claims,
wherein the at least one pin (89) is connected to the connecting device (63) by means of ultrasonic welding in such a way that a materially integral connection is formed.

26. Measuring sensor (69) according to at least one of the previous claims,
wherein the measuring tube arrangement (4) comprises two curved measuring tubes (3),
wherein a respective measuring tube mirror plane (A, B) extends through the two measuring tubes (3),
wherein the at least one pin (89) is arranged within a section delimiting the two measuring tube mirror planes (A, B) or intersecting at least one of the measuring tube mirror planes (A, B),
wherein two measuring tube planes (C, D) running perpendicular to the measuring tube mirror planes (A, B) bound an area in which the at least one pin (89) is arranged,
wherein one of the measuring tube planes (C) intersects the inlets of the measuring tubes (3) and one of the measuring tube planes (D) intersects the outlets of the measuring tubes (3).

27. Measuring sensor (69) according to at least one of the preceding claims,
wherein the connecting device (63) has a connecting device body,
wherein the connecting device body has a plastic, preferably polyetheretherketone (PEEK), polyaryletherketone (PAEK), polyphenylsulfone (PPSU), polyethersulfone (PESU), polysulfone (PSU), polyarylamide (PARA), polypropylene (PP), polycarbonate (PC), polyethylene (PE), fluoropolymers and/or hard polyethylene (HDPE),
wherein the measuring tube arrangement (4) has a measuring tube arrangement body,
wherein the measuring tube arrangement body is metallic, in particular comprises steel.

28. Measuring device (2) for detecting a mass flow, a viscosity, a density and/or a variable derived therefrom of a flowable medium, in particular a Coriolis flow meter comprising:
- a carrier device (16);
- a measuring sensor (69) according to at least one of the preceding claims;
at least one second exciter component of the vibration exciter (7); and
at least one second sensor component of the vibration sensor (8);
the carrier device (16) having a carrier device body with a receptacle (29),
the measuring sensor (69) being arranged in the receptacle (29) and being mechanically separably connectable to the carrier device body;
the second excitation component being arranged on the carrier device body,
the second sensor component being arranged on the carrier device body,
the vibration exciter (7) comprising an operating circuit (15) which is connected to at least one exciter component, in particular the second exciter component of the vibration exciter (7),
wherein the vibration sensor (8) comprises a measuring circuit (15) which is electrically connected to at least one sensor component, in particular the second sensor component of the vibration sensor (8).

## Revendications

1. Capteur de mesure (69) d'un appareil de mesure (2) pour détecter un débit massique, une viscosité, une densité et/ou une grandeur qui en est dérivée d'un milieu fluide, comprenant :
- un ensemble de tubes de mesure (4) pour guider le milieu fluide,
l'ensemble de tubes de mesure (4) comprenant au moins un tube de mesure (3),
ledit au moins un tube de mesure (3) présentant une section d'entrée (20) et une section de sortie (21) ;
- au moins un premier composant d'excitation d'un excitateur d'oscillations (7) pour exciter le au moins un tube de mesure (3) en oscillations,
ledit au moins un composant d'excitation étant disposé sur ledit au moins un tube de mesure (3) ;
- au moins un premier composant de détection d'un capteur de vibrations (8) pour détecter les vibrations du au moins un tube de mesure (3),
ledit au moins un premier composant de capteur étant disposé sur ledit au moins un tube de mesure (3) ;
- un agencement de corps de fixation (5),
l'agencement de corps de fixation (5) étant relié à l'au moins un tube de mesure (3) dans la section d'entrée (20) et dans la section de sortie (21) ;
caractérisé en
- un dispositif de raccordement (63) pour raccorder de manière amovible l'ensemble de tubes de mesure (4) à une conduite de processus,
le dispositif de raccordement (63) présentant des ouvertures de raccordement de tube de mesure (68) auxquelles l'ensemble de tubes de mesure (4) est raccordé,
le dispositif de liaison (63) est relié à l'au moins un tube de mesure (3) dans la section d'entrée (20) et dans la section de sortie (21) ; et
le capteur de mesure comprend un dispositif de fermeture (71),
une liaison par complémentarité de forme et/ou par adhérence étant formée entre le dispositif de liaison (63) et l'agencement de corps de fixation (5) par l'intermédiaire du dispositif de fermeture (71).

2. Capteur de mesure (69) selon la revendication précédente,
l'ensemble de corps de fixation (5) présentant un premier côté d'agencement de corps de fixation (74) et un deuxième côté d'agencement de corps de fixation (75),
dans lequel le premier côté d'agencement de corps de fixation (74) et le deuxième côté d'agencement de corps de fixation (75) sont opposés l'un à l'autre,
dans lequel une ouverture d'agencement de corps de fixation (70) s'étend depuis le premier côté d'agencement de corps de fixation (74) jusqu'au deuxième côté d'agencement de corps de fixation (75),
dans lequel le dispositif de fermeture (71) s'étend à travers l'ouverture d'agencement de corps de fixation (70),
dans lequel le dispositif de connexion (63) présente une surface de contact (72), l'agencement de corps de fixation (5) présentant une surface de contact (73) sur le premier côté d'agencement de corps de fixation (74),
la surface de contact (72) et la surface de contact (73) se touchant.

3. Capteur de mesure (69) selon la revendication 2,
le dispositif de liaison (63) exerçant une force sur l'ensemble de corps de fixation (5) par l'intermédiaire du dispositif de fermeture (71), avec une part de force en direction du deuxième côté de l'ensemble de corps de fixation (75),
le dispositif de fermeture (71) étant notamment relié au dispositif de liaison par une liaison de matière ou étant relié de manière monolithique au dispositif de liaison (63).

4. Capteur de mesure (69) selon la revendication 1,
dans lequel le dispositif de connexion (63) présente un premier côté de dispositif de connexion (78) et un deuxième côté de dispositif de connexion (79),
dans lequel le premier côté du dispositif de connexion (78) et le deuxième côté du dispositif de connexion (79) sont opposés l'un à l'autre,
dans lequel une ouverture de dispositif de connexion (82) s'étend depuis le premier côté de dispositif de connexion (78) jusqu'au second côté de dispositif de connexion (79),
le dispositif de fermeture (71) s'étend à travers l'ouverture de dispositif de connexion (82),
le dispositif de fermeture (71) ayant une surface de contact (72),
dans lequel le dispositif de connexion (63) présente une surface de contact (73) sur le premier côté du dispositif de connexion (78),
la surface de contact (72) et la surface de contact (73) se touchant.

5. Capteur de mesure (69) selon la revendication 4,
dans lequel l'ensemble de tubes de mesure (4) exerce une force sur le dispositif de connexion (63) par l'intermédiaire du dispositif de fermeture (71), avec une part de force en direction du deuxième côté du dispositif de connexion (79),
le dispositif de fermeture (71) étant en particulier relié par liaison de matière à l'agencement de corps de fixation (5) ou étant relié de manière monolithique à l'agencement de corps de fixation (5).

6. Capteur de mesure (69) selon au moins l'une des revendications précédentes,
dans lequel le dispositif de fermeture (71) comprend au moins un ergot d'arrêt (81).

7. Capteur de mesure (69) selon la revendication 6,
dans lequel le dispositif d'obturation (71) comprend au moins quatre ergots d'encliquetage (81.1, 81.2, 81.3, 81.4) qui sont disposés à symétrie de révolution autour d'un axe de rotation, l'axe de rotation étant parallèle à un axe longitudinal de l'ensemble de tubes de mesure (4).

8. Capteur de mesure (69) selon la revendication 1,
dans lequel le dispositif de connexion (63) présente une ouverture de dispositif de connexion (82), en particulier sous forme de trou traversant,
le dispositif de corps de fixation (5) présentant une ouverture de dispositif de corps de fixation (83), en particulier conçue comme un trou de passage,
le dispositif de fermeture (71) comprenant au moins une branche de serrage (84),
l'au moins une branche de serrage (84) s'étendant à travers l'ouverture d'agencement de corps de fixation (83) et au moins partiellement à travers l'ouverture de dispositif de liaison (82),
dans lequel le dispositif de fermeture (71) comprend une broche (85),
dans lequel la broche (85) s'étend à travers l'ouverture d'agencement de corps de fixation (83) et au moins partiellement à travers l'ouverture de dispositif de connexion (82) et est adaptée pour exercer une force sur la au moins une branche de serrage (84) radialement par rapport à l'axe longitudinal de l'ouverture de dispositif de connexion (82).

9. Capteur de mesure (69) selon la revendication 1 et/ou 8,
dans lequel le dispositif de fermeture (71) comprend un rivet, en particulier un rivet non détachable, de préférence un rivet à expansion.

10. Capteur de mesure (69) selon la revendication 1,
dans lequel le dispositif de fermeture (71) comporte au moins une branche d'écartement (85) expansible et notamment reliée de manière monolithique au dispositif de liaison,
le dispositif de fermeture (71) présentant une ouverture de dispositif de connexion (82),
le dispositif de corps de fixation (71) présentant une ouverture de dispositif de corps de fixation (83),
dans lequel la au moins une branche d'écartement (85) s'étend à travers l'ouverture d'agencement de corps de fixation (83),
dans lequel le dispositif de fermeture (71) comprend une broche (85),
dans lequel la broche (85) est disposée dans l'ouverture du dispositif de connexion (82) et est adaptée pour exercer une force radiale sur la au moins une branche d'écartement (86).

11. Capteur de mesure (69) selon la revendication 1,
dans lequel le dispositif de fermeture (71) comprend au moins un clip en sapin.

12. Capteur de mesure (69) selon au moins l'une des revendications précédentes,
dans lequel l'ensemble de corps de fixation (5) présente un premier côté d'ensemble de corps de fixation (74) et un deuxième côté d'ensemble de corps de fixation (75),
le premier côté d'agencement de corps de fixation (74) et le deuxième côté d'agencement de corps de fixation (75) étant opposés l'un à l'autre,
un joint d'étanchéité (76), en particulier élastique, étant disposé entre le dispositif de liaison (63) et le deuxième côté d'agencement du corps de fixation (75),
le joint (76) étant serré entre le dispositif de liaison (63) et l'agencement de corps de fixation (5) et le serrage étant maintenu par la liaison par la forme.

13. Capteur de mesure (69) selon au moins l'une des revendications 2 à 12,
le dispositif de fermeture (71) étant déformé, en particulier au moyen de rivets à ultrasons, de telle sorte qu'une section d'extrémité du dispositif de fermeture (71) présente une surface de section transversale plus grande qu'une surface de section transversale de l'ouverture de l'agencement de corps de fixation (70) ou de l'ouverture du dispositif de connexion (82).

14. Capteur de mesure (69) selon au moins l'une des revendications précédentes,
dans lequel le dispositif de fermeture (71) forme une liaison par matière avec le premier côté d'agencement de corps de fixation (74).

15. Capteur de mesure (69) selon la revendication 13 et/ou 14,
dans lequel le dispositif de fermeture (71) présente une surface striée (87) dans une zone d'extrémité.

16. Capteur de mesure (69) selon au moins l'une des revendications précédentes,
dans lequel le dispositif de fermeture (71) présente une épaisseur de paroi de dispositif de fermeture,
le dispositif de connexion (63) étant au moins partiellement réalisé sous forme de corps creux et présentant une épaisseur de paroi de dispositif de connexion,
l'épaisseur de paroi du dispositif de fermeture étant toujours inférieure ou égale à une épaisseur de paroi maximale du dispositif de connexion.

17. Capteur de mesure (69) selon la revendication 16,
dans lequel le dispositif de fermeture (71) présente un diamètre de dispositif de fermeture,
le diamètre du dispositif d'obturation étant supérieur ou égal à deux fois l'épaisseur maximale de la paroi du dispositif de connexion,
dans lequel le dispositif de fermeture (71) comprend un trou borgne ou un trou traversant qui s'étend à travers l'ouverture d'agencement de corps de fixation (70) et qui limite l'épaisseur de paroi du dispositif de fermeture.

18. Capteur de mesure (69) selon au moins l'une des revendications précédentes,
dans lequel le dispositif de connexion comprend au moins une ouverture (88),
dans lequel le dispositif de fermeture (71) s'étend à travers ladite au moins une ouverture (88).

19. Capteur de mesure (69) selon au moins l'une des revendications précédentes,
dans lequel le dispositif de connexion comprend au moins deux ouvertures (88),
dans lequel le dispositif de fermeture (71) comprend au moins deux tenons (89),
les au moins deux tenons (89) s'étendant à travers les au moins deux ouvertures (88),
le dispositif de fermeture (71) présentant un élément de liaison, en particulier un élément d'étrier (92), qui relie entre eux les au moins deux tenons (89).

20. Capteur de mesure (69) selon au moins l'une des revendications précédentes,
dans lequel le dispositif de connexion (63) comporte au moins quatre ouvertures (88),
dans lequel le dispositif de fermeture (71) comporte au moins quatre tenons (89) reliés entre eux par au moins quatre éléments d'étrier (92).

21. Capteur de mesure (69) selon au moins l'une des revendications 1 à 18,
dans lequel le dispositif de connexion (63) comporte au moins quatre ouvertures (88),
le dispositif de fermeture (71) présentant au moins quatre tenons (89) reliés entre eux par un élément de liaison, notamment en forme de plaque.

22. Capteur de mesure (69) selon au moins l'une des revendications 19 à 21,
L'au moins un tenon (89) présentant une ouverture de tenon (90) qui est configurée de telle sorte qu'une épaisseur de paroi de tenon dans une zone d'extrémité de l'au moins un tenon (89) est toujours inférieure ou égale à une épaisseur de paroi de tenon maximale.

23. Capteur de mesure (69) selon au moins l'une des revendications 19 à 22,
dans lequel les ouvertures (88) et les tenons (89) sont disposés symétriquement par rapport à un plan de symétrie de l'ensemble de tubes de mesure (4).

24. Capteur de mesure (69) selon au moins l'une des revendications 19 à 23,
dans lequel l'au moins un tenon (89) présente une tête qui, sur un côté du tenon tourné vers le premier côté de l'agencement de corps de fixation (74), présente une contre-dépouille (91) qui n'est pas en contact avec l'agencement de corps de fixation (5).

25. Capteur de mesure (69) selon au moins l'une des revendications précédentes,
L'au moins un tenon (89) étant relié au dispositif de liaison (63) par soudage par ultrasons de manière à former une liaison par matière.

26. Capteur de mesure (69) selon au moins l'une des revendications précédentes,
L'ensemble de tubes de mesure (4) comprend deux tubes de mesure (3) courbés,
un plan de miroir de tube de mesure (A, B) s'étendant respectivement à travers les deux tubes de mesure (3),
le au moins un tenon (89) étant disposé à l'intérieur d'une section délimitée par les deux plans de miroir de tube de mesure (A, B) ou coupant au moins l'un des plans de miroir de tube de mesure (A, B),
deux plans de tube de mesure (C, D) s'étendant perpendiculairement aux plans de miroir de tube de mesure (A, B) délimitant une zone dans laquelle est disposé le au moins un tourillon (89),
l'un des plans de tube de mesure (C) coupant les entrées des tubes de mesure (3) et l'un des plans de tube de mesure (D) coupant respectivement les sorties des tubes de mesure (3).

27. Capteur de mesure (69) selon au moins l'une des revendications précédentes,
dans lequel le dispositif de connexion (63) comprend un corps de dispositif de connexion,
le corps du dispositif de connexion comprenant une matière plastique, de préférence des polyétheréthercétones (PEEK), des polyaryléthercétones (PAEK), des polyphénylsulfones (PPSU), des polyéthersulfones (PESU), des polysulfones (PSU), des polyarylamides (PARA), des polypropylènes (PP), des polycarbonates (PC), des polyéthylènes (PE), des fluoropolymères et/ou des polyéthylènes durs (HDPE),
l'ensemble de tubes de mesure (4) comprenant un corps d'ensemble de tubes de mesure,
le corps de l'ensemble de tubes de mesure étant réalisé en métal, en particulier en acier.

28. Appareil de mesure (2) pour la détection d'un débit massique, d'une viscosité, d'une densité et/ou d'une grandeur qui en est dérivée d'un milieu fluide, en particulier un débitmètre à effet Coriolis comprenant :
- un dispositif de support (16) ;
- un capteur de mesure (69) selon au moins l'une des revendications précédentes ;
- au moins un deuxième composant d'excitation du générateur de vibrations (7) ; et
- au moins un deuxième composant de détection du capteur de vibrations (8) ;
le dispositif de support (16) présentant un corps de dispositif de support avec un logement (29), le capteur de mesure (69) étant disposé dans le logement (29) et pouvant être relié mécaniquement de manière séparable au corps du dispositif de support ;
le deuxième composant d'excitation étant disposé sur le corps du dispositif de support,
le deuxième composant de détection étant disposé sur le corps du dispositif de support,
dans lequel le générateur de vibrations (7) comprend un circuit de fonctionnement (15) qui est relié à au moins un composant d'excitation, en particulier au deuxième composant d'excitation du générateur de vibrations (7),
le capteur de vibrations (8) comprenant un circuit de mesure (15) qui est relié électriquement à au moins un composant de capteur, en particulier au deuxième composant de capteur du capteur de vibrations (8).
